# EUROPÄISCHE PATENTSCHRIFT

(11) **EP 2 356 527 B1**
(45) Veröffentlichungstag und Bekanntmachung des Hinweises auf die Patenterteilung: **25.09.2013**
(21) Anmeldenummer: 09804248.4
(22) Anmeldetag: 20.11.2009
(51) Int. Cl.: G05B 19/042, G05B 23/02

(54) **SICHERHEITSSTEUERUNG UND VERFAHREN ZUM STEUERN EINER AUTOMATISIERTEN ANLAGE MIT EINER VIELZAHL VON ANLAGENHARDWAREKOMPONENTEN**
SAFETY CONTROL AND METHOD FOR CONTROLLING AN AUTOMATED SYSTEM HAVING A PLURALITY OF SYSTEM HARDWARE COMPONENTS
COMMANDE DE SÉCURITÉ ET PROCÉDÉ POUR COMMANDER UNE INSTALLATION AUTOMATISÉE COMPRENANT UNE PLURALITÉ DE COMPOSANTS MATÉRIELS

(30) Priorität: 25.11.2008 DE 102008060005
(43) Veröffentlichungstag der Anmeldung: 17.08.2011
(73) Patentinhaber: Pilz GmbH & Co. KG, 73760 Ostfildern (DE)
(72) Erfinder: ZONDLER, Martin, 73760 Ostfildern (DE); EHRHART, Helmut, 70372 Stuttgart (DE); FOERSTER, Harald, 730790 Suessen (DE)
(74) Vertreter: Witte, Weller & Partner
(86) Internationale Anmeldenummer: PCT/EP2009/008265
(87) Internationale Veröffentlichungsnummer: WO 2010/060573

(56) Entgegenhaltungen:
- EP-A2- 0 482 523
- DE-A1-102004 020 994
- GB-A- 2 398 395

## Beschreibung

Die vorliegende Erfindung betrifft eine Sicherheitssteuerung zum Steuern einer automatisierten Anlage mit einer Vielzahl von Anlagenhardwarekomponenten, die eine Vielzahl von Sensoren und eine Vielzahl von Aktoren umfassen, mit einer Steuerungseinheit, der eine Vielzahl von Steuerungseingangssignalen von der Vielzahl von Sensoren zugeführt sind, wobei die Steuerungseinheit dazu ausgebildet ist, eine Vielzahl von Steuerungsausgangssignalen in Abhängigkeit von den Steuerungseingangssignalen gemäß einem in ihr ablaufenden Anwenderprogramm zu erzeugen, wobei mit der Vielzahl von Steuerungsausgangssignalen die Vielzahl von Aktoren angesteuert werden, mit einer Schnittstelle für eine Anzeigeeinheit, wobei die Anzeigeeinheit dazu ausgebildet ist, Diagnosemeldungen anzuzeigen, mit einer Prozessdiagnoseauswerteeinheit, der eine Anzahl von Prozessdiagnoseeingangssignalen zugeführt sind, wobei die Prozessdiagnoseauswerteeinheit dazu ausgebildet ist, in Abhängigkeit von der Anzahl von Prozessdiagnoseeingangssignalen festzustellen, welcher von mehreren Prozesszuständen der zu steuernden Anlage zu einem ersten definierten Zeitpunkt vorliegt, wobei die Prozessdiagnoseauswerteeinheit dazu ausgebildet ist, eine Anzahl von Prozesszustandssignalen zu erzeugen, wobei die Anzahl von Prozesszustandssignalen eine Anzahl von festgestellten Prozesszuständen repräsentiert, wobei die Anzahl von festgestellten Prozesszuständen zu dem ersten definierten Zeitpunkt vorliegen, mit einer Systemdiagnoseauswerteeinheit, der eine Anzahl von Systemdiagnoseeingangssignalen zugeführt sind, wobei die Systemdiagnoseauswerteeinheit dazu ausgebildet ist, in Abhängigkeit von der Anzahl von Systemdiagnoseeingangssignalen festzustellen, welcher von mehreren Systemzuständen der Sicherheitssteuerung zu einem zweiten definierten Zeitpunkt vorliegt, wobei die Systemdiagnoseauswerteeinheit dazu ausgebildet ist, eine Anzahl von Systemzustandssignalen zu erzeugen, wobei die Anzahl von Systemzustandssignalen eine Anzahl von festgestellten Systemzuständen repräsentiert, wobei die Anzahl von festgestellten Systemzuständen zu dem zweiten definierten Zeitpunkt vorliegen, und mit einer Diagnosemeldungseinheit, der die Anzahl von Prozesszustandssignalen und die Anzahl von Systemzustandssignalen zugeführt sind, wobei die Diagnosemeldungseinheit dazu ausgebildet ist, für die Anzahl von festgestellten Prozesszuständen und für die Anzahl von festgestellten Systemzuständen eine Anzahl von Diagnosemeldungen bereitzustellen, wobei die Diagnosemeldungseinheit eine Anzahl von Diagnosesignalen erzeugt, die die Diagnosemeldungen repräsentieren, wobei die Anzahl von Diagnosesignalen der Anzeigeeinheit zum Anzeigen der Diagnosemeldungen zugeführt sind.

Die Erfindung betrifft ferner ein Verfahren zum Steuern einer automatisierten Anlage mit einer Vielzahl von Anlagenhardwarekomponenten, die eine Vielzahl von Sensoren und Aktoren umfassen, mit den Schritten:
- Feststellen in Abhängigkeit von einer Anzahl von Prozessdiagnoseeingangssignalen, welcher von mehreren Prozesszuständen der zu steuernden Anlage zu einem ersten definierten Zeitpunkt vorliegt, und Erzeugen einer Anzahl von Prozesszustandssignalen, wobei die Anzahl von Prozesszustandssignalen eine Anzahl von festgestellten Prozesszuständen repräsentiert, wobei die Anzahl von festgestellten Prozesszuständen zu dem ersten definierten Zeitpunkt vorliegen,
- Feststellen in Abhängigkeit von einer Anzahl von Systemdiagnoseeingangssignalen, welcher von mehreren Systemzuständen der Sicherheitssteuerung zu einem zweiten definierten Zeitpunkt vorliegt, und Erzeugen einer Anzahl von Systemzustandssignalen, wobei die Anzahl von Systemzustandssignalen eine Anzahl von festgestellten Systemzuständen repräsentiert, wobei die Anzahl von festgestellten Systemzuständen zu dem zweiten definierten Zeitpunkt vorliegen,
- Zuführen der Anzahl von Prozesszustandssignalen und der Anzahl von Systemzustandssignalen zu einer Diagnosemeldungseinheit,
- Bereitstellen einer Anzahl von Diagnosemeldungen für die Anzahl von festgestellten Prozesszuständen und für die Anzahl von festgestellten Systemzuständen, und Erzeugen einer Anzahl von Diagnosesignalen in der Diagnosemeldungseinheit, wobei die Anzahl von Diagnosesignalen die Anzahl von Diagnosemeldungen repräsentieren,
- Zuführen der Anzahl von Diagnosesignalen zu einer Anzeigeeinheit zum Anzeigen der Anzahl von Diagnosemeldungen.

Eine solche Sicherheitssteuerung und ein solches Verfahren sind im Wesentlichen in GB 2 398 395 A offenbart.

Eine Sicherheitssteuerung im Sinne der vorliegenden Erfindung ist ein Gerät oder eine Vorrichtung, das bzw. die von Sensoren gelieferte Eingangssignale aufnimmt und daraus durch logische Verknüpfungen und unter Umständen weiterer Signal- oder Datenverarbeitungsschritte Ausgangssignale erzeugt. Die Ausgangssignale können dann Aktuatoren zugeführt werden, die dann in Abhängigkeit von den Eingangssignalen gezielte Aktionen oder Reaktionen in der Umgebung bewirken.

Ein bevorzugtes Anwendungsgebiet für derartige Sicherheitssteuerungen ist im Bereich der Maschinensicherheit zur Überwachung von Not-Aus-Tastern, Zwei-Hand-Steuerungen, Schutztüren oder Lichtgittern. Derartige Sensoren werden verwendet, um beispielsweise eine Maschine, von der im Betrieb eine Gefahr für Menschen oder materielle Güter ausgeht, abzusichern. Beim Öffnen der Schutztür oder beim Betätigen des Not-Aus-Tasters wird jeweils ein Signal erzeugt, das der Sicherheitssteuerung als Eingangssignal zugeführt ist. In Reaktion darauf schaltet die Sicherheitssteuerung dann beispielsweise mit Hilfe eines Aktuators den Gefahr bringenden Teil der Maschine ab.

Charakteristisch an einer Sicherheitssteuerung ist im Gegensatz zu einer "normalen" Steuerung, dass die Sicherheitssteuerung selbst dann, wenn bei ihr oder einem mit ihr verbundenen Gerät eine Fehlfunktion auftritt, stets einen sicheren Zustand der Gefahr bringenden Anlage oder Maschine gewährleistet. Daher werden bei Sicherheitssteuerungen extrem hohe Anforderungen an die eigene Fehlersicherheit gestellt, was einen erheblichen Aufwand bei der Entwicklung und Herstellung zur Folge hat.

In der Regel benötigen Sicherheitssteuerungen vor ihrer Verwendung eine besondere Zulassung durch zuständige Aufsichtsbehörden, wie beispielsweise in Deutschland durch die Berufsgenossenschaften oder den TÜV. Die Sicherheitssteuerung muss dabei vorgegebene Sicherheitsstandards einhalten, die beispielsweise in der europäischen Norm EN 954-1 oder einer vergleichbaren Norm, beispielsweise der Norm IEC 61508 oder der Norm EN ISO 13849-1 niedergelegt sind. Im Folgenden wird daher unter einer Sicherheitssteuerung ein Gerät bzw. eine Vorrichtung verstanden, die zumindest die Sicherheitskategorie 3 der genannten europäischen Norm EN 954-1 erfüllt.

Eine programmierbare Sicherheitssteuerung bietet dem Anwender die Möglichkeit, die logischen Verknüpfungen und ggf. weitere Signal- oder Datenverarbeitungsschritte mit Hilfe einer Software, dem genannten Anwenderprogramm, seinen Bedürfnissen entsprechend individuell festzulegen. Daraus resultiert eine große Flexibilität im Vergleich zu früheren Lösungen, bei denen die logischen Verknüpfungen durch eine definierte Verdrahtung zwischen verschiedenen Sicherheitsbausteinen erzeugt wurden. Ein Anwenderprogramm kann beispielsweise mit Hilfe eines handelsüblichen Personalcomputers (PC) und unter Verwendung entsprechend eingerichteter Softwareprogramme erstellt werden.

Das in der Sicherheitssteuerung ablaufende Anwenderprogramm legt den Prozess fest, der auf der durch die Sicherheitssteuerung gesteuerten Anlage abläuft. Dieser Prozess wird mittels einer Prozessdiagnose überwacht. Im Rahmen der Prozessdiagnose wird überprüft, welcher von mehreren Prozesszuständen der zu steuernden Anlage zu einem definierten Zeitpunkt vorliegt. Somit werden sowohl zulässige als unzulässige Prozesszustände erfasst. Ein Ziel ist es, unzulässige Prozesszustände, sog. Störungen, zu erfassen und diese auf einer Anzeigeeinheit anzuzeigen, so dass das Bedienpersonal der zu steuernden Anlage die Störung beseitigen kann. In der Regel handelt es sich bei solch einer Anzeigeeinheit um eine in den Leitstand der zu steuernden Anlage integrierte Anzeigeeinheit.

Insgesamt wird durch die Prozessdiagnose und das damit verbundene Zum-Anzeige-Bringen der erfassten, d.h. festgestellten Prozesszustände ein Prozessabbild auf der Anzeigeeinheit dargestellt, welches sowohl die zulässigen als auch die unzulässigen Prozesszustände umfasst.

Die mittels der Prozessdiagnose erfassten Prozesszustände werden u.a. durch logische Abfragen ermittelt, weswegen festgestellte unzulässige Prozesszustände auch als logische Fehler bezeichnet werden. Bei diesen logischen Abfragen werden beispielsweise für mit Sensoren erfasste Größen Grenzwert- oder Bereichsvergleiche durchgeführt, d.h. der jeweils vorliegende Messwert der erfassten Größe wird mit einem oder mehreren Grenzwerten verglichen.

Ein Beispiel hierfür ist die Überwachung des Füllstandes eines Behälters. Hierzu ist dem Behälter ein Füllstandssensor zugeordnet. Der Füllstandssensor erzeugt ein Füllstandssignal, welches den erfassten Füllstand des Behälters repräsentiert. In der Regel handelt es sich bei dem Füllstandssignal um eine Spannung, wobei der Wert der Spannung dem im Behälter vorliegenden Füllstand proportional ist. In Abhängigkeit davon, ob die weitere Verarbeitung analog oder digital abläuft, wird dieser Spannungswert selbst oder eine daraus abgeleitete Größe mit einem Grenzwert verglichen. Wird bei diesem Vergleich festgestellt, dass der Grenzwert überschritten ist, so wird dies als "Behälter voll" interpretiert und keine Diagnosemeldung erstellt Wird dagegen bei dem Vergleich festgestellt, dass der Grenzwert unterschritten ist, so wird dies als "Behälter leer" interpretiert. Es wird davon ausgegangen, dass ein unzulässiger Prozesszustand, ein Fehlerzustand vorliegt. Auf der Anzeigeeinheit wird eine Diagnosemeldung angezeigt, die diesen unzulässigen Prozesszustand repräsentiert. Es wird somit auf der Anzeigeeinheit ein logischer Fehler dargestellt.

Nun sind jedoch zwei Konstellationen denkbar. Bei der ersten Konstellation ist der Behälter tatsächlich leer. In diesem Fall entspricht der festgestellte Prozesszustand, d.h. der festgestellte logische Fehler der Realität. Die auf der Anzeigeeinheit dargestellte Diagnosemeldung gibt die Realität korrekt wieder. Der Behälter ist vom Bedienpersonal, beispielsweise einem Instandhalter, aufzufüllen.

Es ist aber auch eine zweite Konstellation denkbar, bei der der Behälter tatsächlich nicht leer ist. In diesem Fall entspricht der festgestellte Prozesszustand, d.h. der festgestellte logische Fehler, nicht der Realität und die auf der Anzeigeeinheit dargestellte Diagnosemeldung gibt die Realität nicht korrekt wieder. Dies kann beispielsweise dann der Fall sein, wenn der Füllstandssensor fehlerhaft ist oder ein Fehler in der im Füllstandssensor an die Sicherheitssteuerung anbindende Verdrahtung oder ein Fehler in der Sicherheitssteuerung selbst vorliegt. In all diesen Fällen wird eine Diagnosemeldung angezeigt, die auf einen leeren Behälter hinweist, obwohl der Behälter voll ist. Das Anzeigen dieser Diagnosemeldung ist nicht nur irreführend, darüber hinaus erhält das Bedienpersonal keinen Hinweis auf die tatsächlich vorliegende Ursache, die dazu geführt hat, dass durch die Prozessdiagnose der der angezeigten Diagnosemeldung zugrunde liegende Prozesszustand festgestellt wurde.

Die eingangs genannte GB 2 398 395 A beschreibt eine Prozessanlage mit einem integrierten Sicherheitssystem, das zusammen mit der Prozesssteuerung gemeinsame Kommunikations-, Diagnose- und Anzeigehardware und auch entsprechende Software verwendet. Eine Diagnoseanwendung kann Diagnoseinformationen sowohl für das Prozesssteuerungssystem als auch für das Sicherheitssystem unter Verwendung einer gemeinsamen Schnittstelle anzeigen und Diagnoseaktivitäten ausführen. Dabei legt GB 2 398 395 A Wert darauf, dass Alarme der Prozesssteuerung und Alarme des Sicherheitssystems auf der Anzeige in einer Art und Weise angezeigt werden, die die Alarme des Prozesssteuerungssystems und des Sicherheitssystems voneinander unterscheidet. Über Filtermechanismen, die sich auf alle Alarme in der Anlage anwenden lassen, kann ein Anwender die Anzeige von Alarmen seinen Bedürfnissen entsprechend anpassen. Eine im System fest hinterlegte Zuordnung von Prozess- und Sicherheitsalarmen ist in GB 2 398 395 A nicht offenbart.

EP 0 482 523 A2 offenbart ein Anzeigesystem zur Fehlerdiagnose bei komplexen industriellen Anlagen. Das Anzeigesystem identifiziert mögliche Fehlerquellen, und es verwendet diese Diagnoseinformationen, um die jeweils interessantesten Abschnitte innerhalb einer Prozesshierarchie und innerhalb einer Komponentenhierarchie anzuzeigen. Auf einer zweigeteilten Anzeige werden die Hardwarekomponenten auf der einen Seite und die Prozessschritte auf der anderen Seite jeweils in einer hierarchischen Anordnung dargestellt.

Die vorstehenden Ausführungen zeigen, dass die in den bekannten Sicherheitssteuerungen und Verfahren eingesetzten Diagnosemaßnahmen noch nicht optimal sind.

Es ist daher eine Aufgabe der vorliegenden Erfindung, eine Sicherheitssteuerung und ein Verfahren der eingangs genannten Art weiterzubilden, um das Bedienpersonal einer Anlage noch besser über bei dem Betrieb der Anlage auftretende Störungen zu informieren und noch besser bei der Behebung dieser Störungen zu unterstützen.

Diese Aufgabe wird durch eine Sicherheitssteuerung und ein Verfahren der eingangs genannten Art gelöst, wobei die Diagnosemeldungseinheit eine Zuordnungsspeichereinheit aufweist, in der zumindest für eine Vielzahl der mehreren Prozesszustände und zumindest für eine Vielzahl der mehreren Systemzustände eine Vielzahl von Zuordnungsgrößen hinterlegt sind, wobei die hinterlegten Zuordnungsgrößen anzeigen, welcher der mehreren Systemzustände welchem der mehreren Prozesszustände aufgrund einer vordefinierten Zuordnung jeweils zugeordnet ist, wobei die Diagnosemeldungseinheit dazu ausgebildet ist, für eine Anzahl von Paarungen der festgestellten Systemzustände und der festgestellten Prozesszustände eine Anzahl von hinterlegten Zuordnungsgrößen auszuwählen, wobei jede dieser ausgewählten Zuordnungsgrößen zumindest eine der Paarungen repräsentiert, wobei die Diagnosemeldungseinheit dazu ausgebildet ist, eine Anzahl von zugeordneten Systemzuständen in Abhängigkeit der Zuordnungsgrößen zu ermitteln, und wobei zumindest für einen der festgestellten Prozesszustände eine Diagnosemeldung in Abhängigkeit dieses Prozesszustands und der Anzahl von zugeordneten Systemzuständen, die diesem Prozesszustand zugeordnet sind, bereitgestellt wird.

Der neuen Sicherheitssteuerung und dem neuen Verfahren liegt die Idee zugrunde, die Prozessdiagnose mit der Systemdiagnose zu verknüpfen. Hierzu ist eine Prozessdiagnoseauswerteeinheit vorgesehen, die dazu ausgebildet ist, in Abhängigkeit von einer Anzahl von Prozessdiagnoseeingangssignalen, die ihr zugeführt werden, festzustellen, welcher von mehreren Prozesszuständen der zu steuernden Anlage zu einem ersten definierten Zeitpunkt vorliegt. Insgesamt können eine Anzahl von festgestellten Prozesszuständen zu dem ersten definierten Zeitpunkt vorliegen. Ferner ist eine Systemdiagnoseauswerteeinheit vorgesehen, die dazu ausgebildet ist, in Abhängigkeit von einer Anzahl von Systemdiagnoseeingangssignalen, die ihr zugeführt werden, festzustellen, welcher von mehreren Systemzuständen der Sicherheitssteuerung zu einem zweiten definierten Zeitpunkt vorliegt. Insgesamt können eine Anzahl von festgestellten Systemzuständen zu dem zweiten definierten Zeitpunkt vorliegen.

Ein Systemzustand einer Sicherheitssteuerung ist ein Zustand, dem zum einen die Sicherheitssteuerung als solche, d.h. die bauliche Einheit, in der die Logikkomponenten, beispielsweise Prozessoren und Speicher, untergebracht sind, die für die Realisierung von Steuerungsaufgabe erforderlich sind, und zum anderen diejenigen Komponenten, beispielsweise Sensoren und Aktoren, der zu steuernden Anlage, die mit dieser baulichen Einheit elektrisch verbunden sind, und darüber hinaus sogenannte Meldegeräte, beispielsweise Betriebsartenwahlschalter, die ebenfalls mit dieser baulichen Einheit verbunden sind, einnehmen können. Mit umfasst bei dieser Betrachtung sind auch sämtliche Verdrahtungen. Mit Blick auf eine Diagnose sind vor allem diejenigen Systemzustände von Interesse, bei denen an einer der vorstehend aufgezählten Komponenten ein Fehler auftritt. Diese Fehler werden als physikalische Fehler bezeichnet.

Die Verknüpfung von Prozessdiagnose und Systemdiagnose erfolgt dadurch, dass für denjenigen festgestellten Prozesszustand, für den in den festgestellten Systemzuständen Systemzustände enthalten sind, die diesem Prozesszustand zugeordnet sind, eine Diagnosemeldung in Abhängigkeit dieses Prozesszustandes selbst und einer Anzahl von zugeordneten Systemzuständen bereitgestellt wird.

Ferner weist die Diagnosemeldungseinheit eine Zuordnungsspeichereinheit auf, in der zumindest für eine Vielzahl der mehreren Prozesszustände und zumindest für eine Vielzahl der mehreren Systemzustände eine Vielzahl von Zuordnungsgrößen hinterlegt sind, wobei die hinterlegten Zuordnungsgrößen anzeigen, welcher der mehreren Systemzustände welchem der mehreren Prozesszustände aufgrund einer vordefinierten Zuordnung jeweils zugeordnet ist, wobei die Diagnosemeldungseinheit dazu ausgebildet ist. Durch diese Maßnahme ist es in einfacher und zudem sehr zuverlässiger Art und Weise möglich, die Anzahl von zugeordneten Systemzuständen zu ermitteln. Dadurch, dass in der Zuordnungsspeichereinheit die vordefinierten Zuordnungen, die zwischen den mehreren Systemzuständen und den mehreren Prozesszuständen jeweils existieren, fest abgespeichert sind, kann eindeutig festgestellt werden, welcher der festgestellten Systemzustände welchem der festgestellten Prozesszustände jeweils zugeordnet ist. Dadurch ist eine vollständig und zuverlässige Unterrichtung des Bedienpersonals einer Anlage gewährleistet.

Vorzugsweise sind diese Zuordnungsgrößen als logische Größen ausgebildet, die anzeigen, für welche der Kombinationen, die zwischen den mehreren Systemzuständen und den mehreren Prozesszuständen denkbar sind, jeweils eine Zuordnung existiert. Für die Zuordnungsgrößen sind mehrere Ausführungsformen denkbar. So kann es sich beispielsweise um eine Matrix handeln, bei der dann in ein Matrixfeld eine logische Eins eingetragen ist, wenn zwischen dem zu dessen Matrixfeld gehörenden Prozesszustand und dem zu diesem Matrixfeld gehörenden Systemzustand eine vordefinierte Zuordnung existiert und bei der dann in ein Matrixfeld eine logische Null eingetragen ist, wenn zwischen dem zu diesem Matrixfeld gehörenden Prozesszustand und dem zu diesem Matrixfeld gehörenden Systemzustand keine vordefinierte Zuordnung existiert. Alternativ kann es sich bei den Zuordnungsgrößen um mehrere Vektoren handeln. Dabei repräsentiert jeder dieser Vektoren einen der mehreren Prozesszustände und gibt diejenigen Systemzustände an, die diesem Prozesszustand über vordefinierte Zuordnungen zugeordnet sind. In einer weiteren Alternative kann es sich bei den Zuordnungsgrößen um eine Vielzahl von Dupel handeln. Jeder dieser Dupel repräsentiert eine Kombination aus einem der mehreren Systemzustände und einem der mehreren Prozesszustände, zwischen denen eine vordefinierte Zuordnung existiert.

Durch den erfindungsgemäßen Ansatz wird erreicht, dass bei dem Bereitstellen einer Diagnosemeldung der Prozesszustand selbst und diesem Prozesszustand zugeordnete Systemzustände gleichzeitig berücksichtigt werden. Das heißt in das Bereitstellen der Diagnosemeldung geht nicht nur der festgestellte Prozesszustand selbst, sondern gehen auch die diesen verursachenden Systemzustände ein. Mit anderen Worten: Bei dem Bereitstellen der Diagnosemeldung wird nicht nur der logische Fehler, sondern auch die diesen verursachenden physikalischen Fehler berücksichtigt.

Die gleichzeitige Berücksichtigung eines Prozesszustandes und der diesen verursachenden Systemzustände bildet die Grundlage für eine umfassende Unterrichtung des Bedienpersonals über bei dem Betrieb einer Anlage auftretenden Störungen. Dem Bedienpersonal kann der dem logischen Fehler zugrunde liegende physikalische Fehler mitgeteilt werden. Somit kann das Bedienpersonal umgehend Maßnahmen zur Behebung des physikalischen Fehlers und somit der Störung ergreifen.

Gleichzeitig wird durch den erfindungsgemäßen Ansatz die Verlässlichkeit in Bezug auf eine Diagnosemeldung, die einen festgestellten Prozesszustand repräsentiert, erhöht. Wird auf einer Anzeigeeinheit eine Diagnosemeldung angezeigt, die lediglich Informationen zu einem festgestellten Prozesszustand, d.h. zu einem logischen Fehler enthält, und keinen Hinweis auf einen zugrunde liegenden Systemzustand und somit einen den logischen Fehler verursachenden physikalischen Fehler, so bedeutet dies aufgrund des erfindungsgemäßen Ansatzes, dass der festgestellte Prozesszustand die Realität korrekt wiedergibt und es keine physikalische Fehlerursache für die Diagnosemeldung gibt. Denn eine Sicherheitssteuerung muss so realisiert sein, dass zur Erzielung einer fehlersicheren Steuerung sämtliche denkbaren physikalischen Fehler erfasst werden.

Durch den erfindungsgemäßen Ansatz wird somit eine bessere Unterrichtung des Bedienpersonals über beim Betrieb einer Anlage auftretende Störungen und eine bessere Unterstützung bei der Behebung dieser Störungen erreicht.

Wenn im Zusammenhang mit der erfindungsgemäßen Sicherheitssteuerung und dem erfindungsgemäßen Verfahren von Bedienpersonal die Rede ist, dann ist darunter nicht nur der klassische Bediener einer Anlage, sondern auch der Instandhalter, der Einrichter, der Ersteller eines Anwenderprogrammes oder der Hersteller der Sicherheitssteuerung zu verstehen.

Die oben genannte Aufgabe ist daher vollständig gelöst.

Bevor nachfolgend bevorzugte Ausgestaltungen der Erfindung dargelegt werden, sollen einige Überlegungen vorangestellt werden.

Gemäß den vorstehenden Ausführungen ist die Prozessdiagnoseauswerteeinheit dazu ausgebildet, festzustellen, welcher von mehreren Prozesszuständen der zu steuernden Anlage zu einem ersten definierten Zeitpunkt vorliegt, wohingegen die Systemdiagnoseauswerteeinheit dazu ausgebildet ist, festzustellen, welcher von mehreren Systemzuständen der Sicherheitssteuerung zu einem zweiten definierten Zeitpunkt vorliegt. Die Unterscheidung in einen ersten und in einen zweiten definierten Zeitpunkt trägt folgendem Sachverhalt Rechnung: Eine programmierbare Sicherheitssteuerung ist ein Mikroprozessor basiert zeitdiskret mit einer definierten Taktrate arbeitendes System. Aus diesem Grund sind zeitkontinuierlich vorliegende, d.h. analoge Signale, wie sie beispielsweise von Sensoren bereitgestellt werden, in digitale Signale umzuwandeln, damit deren Verarbeitung in der Sicherheitssteuerung überhaupt möglich ist. Die Umwandlung erfolgt zu durch die Taktrate vorgegebenen Zeitpunkten. Somit kann es vorkommen, dass für einen Prozesszustand und einen zugeordneten Systemzustand die Abfragen, mit denen das Vorliegen des jeweiligen Zustandes festgestellt werden kann, zu geringfügig unterschiedlichen Zeitpunkten erfolgen. Dies ist beispielsweise dann der Fall, wenn in der Sicherheitssteuerung eine für den Prozesszustand auszuwertende Größe eher bereitgestellt ist, als eine für den Systemzustand auszuwertende Größe. Folglich werden in der Sicherheitssteuerung der Prozesszustand und der Systemzustand zu unterschiedlichen Zeitpunkten festgestellt. In der Regel liegen diese beiden Zeitpunkte innerhalb eines kleinen definierten Zeitintervalls, dessen Länge einem Vielfachen der durch die Taktrate vorgegebenen Periodendauer entspricht. In diesem Fall liegen der erste definierte Zeitpunkt und der zweite definierte Zeitpunkt sehr dicht beieinander, der Systemzustand und der Prozesszustand werden quasi zeitgleich festgestellt. Die Berücksichtigung eines ersten definierten Zeitpunktes und eines zweiten definierten Zeitpunktes soll auch den Sachverhalt umfassen, bei dem zwischen dem Feststellen eines Prozesszustandes und dem Feststellen eines Systemzustandes mehrere Sekunden oder gar Minuten liegen.

Die vorstehend dargelegte funktionell bedingte Aufteilung in eine Prozessdiagnoseauswerteeinheit, eine Systemdiagnoseauswerteeinheit und eine Diagnosemeldungseinheit soll keine Vorgabe für die innerhalb einer Sicherheitssteuerung konkret realisierte strukturelle Ausgestaltung haben. So ist es denkbar, die Idee dieser drei Einheiten strukturell eigenständig auszuführen oder die Prozessdiagnoseauswerteeinheit und die Systemdiagnoseauswerteeinheit als eine gemeinsame strukturelle Einheit auszuführen oder gar alle drei Einheiten als eine gemeinsame strukturelle Einheit auszuführen.

In einer bevorzugten Ausgestaltung der Erfindung ist die Diagnosemeldungseinheit dazu ausgebildet, eine Anzahl von Zuordnungsgrößen zu ermitteln, wobei die Zuordnungsgrößen anzeigen, welcher der Anzahl von festgestellten Systemzuständen welchem der Anzahl von festgestellten Prozesszuständen jeweils zugeordnet ist, wobei die Diagnosemeldungseinheit dazu ausgebildet ist, die Anzahl von zugeordneten Systemzuständen in Abhängigkeit der Anzahl von Zuordnungsgrößen zu ermitteln.

Diese Maßnahme stellt eine einfache Vorgehensweise für die Zuordnung eines Systemzustandes zu einem Prozesszustand dar. Somit ist die Anzahl von festgestellten Systemzuständen, die einen festgestellten Prozesszustand verursachen, diesem Prozesszustand zugeordnet.

In einer bevorzugten Ausgestaltung der Erfindung ist die Diagnosemeldungseinheit dazu ausgebildet, bei Vorliegen eines festgestellten Prozesszustands und einer Anzahl von zugeordneten Systemzuständen, als Diagnosemeldung für diesen Prozesszustand eine Anzahl von Systemdiagnosemeldungen bereitzustellen, wobei die Anzahl von Systemdiagnosemeldungen die Anzahl von zugeordneten Systemzuständen repräsentieren.

Wie bereits ausgeführt, hat ein Prozesszustand, d.h. ein logischer Fehler, einen Systemzustand, d.h. einen physikalischen Fehler als Ursache. Durch diese Maßnahme wird erreicht, dass für einen festgestellten Prozesszustand nicht die ihn repräsentierende Prozessdiagnosemeldung, sondern sofort die Systemdiagnosemeldungen, die die Anzahl von zugeordneten Systemzuständen repräsentieren, auf der Anzeigeeinheit angezeigt werden. Somit wird dem Bedienpersonal einer Anlage sofort angezeigt, welche physikalischen Fehler vorliegen. Das Bedienpersonal kann somit umgehend mit der Behebung der Störung beginnen. Diese Maßnahme ermöglicht somit eine zeitlich optimale Störungsbehebung.

In einer bevorzugten Ausgestaltung der Erfindung ist die Diagnosemeldungseinheit dazu ausgebildet, bei Vorliegen eines festgestellten Prozesszustands und einer Anzahl von zugeordneten Systemzuständen, als Diagnosemeldung für diesen Prozesszustand eine Kombinationsdiagnosemeldung bereitzustellen, wobei die Kombinationsdiagnosemeldung sowohl eine Prozessdiagnosemeldung als auch eine Anzahl von Systemdiagnosemeldungen beinhaltet, wobei die Prozessdiagnosemeldung den festgestellten Prozesszustand repräsentiert und die Anzahl von Systemdiagnosemeldungen die Anzahl von zugeordneten Systemzustände repräsentieren.

Diese Maßnahme hat den Vorteil, dass das Bedienpersonal einer Anlage sowohl über einen festgestellten Prozesszustand als auch über diejenigen festgestellten Systemzustände, die diesem Prozesszustand zugeordnet sind, umfassend unterrichtet wird. Somit ist das Bedienpersonal über einen vorliegenden logischen Fehler und über die diesem logischen Fehler verursachenden physikalischen Fehler unterrichtet. Es ist nicht nur eine umfassende Unterrichtung des Bedienpersonals gewährleistet, aufbauend auf der umfassenden Unterrichtung ist eine unmittelbare Behebung eines Störzustandes möglich.

In einer weiteren Ausgestaltung der zuvor genannten Maßnahme ist die Anzeigeeinheit dazu ausgebildet,

- zunächst die Prozessdiagnosemeldung anzuzeigen und bei Vorliegen einer Systemdiagnoseanforderung die Prozessdiagnosemeldung durch zumindest eine der Anzahl von Systemdiagnosemeldungen zu ersetzen oder ergänzend zu der Prozessdiagnosemeldung zumindest eine der Anzahl von Systemdiagnosemeldungen anzuzeigen, oder

- die Prozessdiagnosemeldung und zumindest eine der Anzahl von Systemdiagnosemeldungen gleichzeitig anzuzeigen, oder

- lediglich zumindest eine der Anzahl von Systemdiagnosemeldungen anzuzeigen.

Wird als Diagnosemeldung eine Kombinationsdiagnosemeldung bereitgestellt, so sind grundsätzlich verschiedene Vorgehensweisen, was die Anzeige der in der Kombinationsdiagnosemeldung enthaltenen Information angeht, denkbar.

Sowohl die erste Alternative, bei der zunächst die Prozessdiagnosemeldung und bei Vorliegen einer Systemdiagnoseanforderung ersetzend oder ergänzend zumindest eine der Systemdiagnosemeldungen angezeigt wird, als auch die zweite Alternative, bei der von Anfang an gleichzeitig die Prozessdiagnosemeldung und zumindest eine der Systemdiagnosemeldungen angezeigt werden, haben den Vorteil der umfassenden Unterrichtung des Bedienpersonals. Gegenüber der zweiten Alternative hat die erste Alternative den Vorteil, dass die Darstellung auf der Anzeigeeinheit zunächst übersichtlicher ist und bei Bedarf, wenn beispielsweise eine Person die Anzeigeeinheit abliest, die über eine entsprechende Zugriffsberechtigung verfügt, die einen Eingriff in die Anlage zum Beheben einer Störung ermöglicht, einer oder mehrere der physikalischen Fehler und somit der in der Anlage vorhandenen Defekte angezeigt werden kann. Die dritte Alternative, gemäß der von Anfang an lediglich zumindest eine der Systemdiagnosemeldungen angezeigt wird, versetzt das Bedienpersonal der Anlage in die Anlage, unverzüglich mit der Behebung der Störung zu beginnen. Zudem hat sie den Vorteil einer übersichtlichen Darstellung.

In einer bevorzugten Ausgestaltung der Erfindung ist die Diagnosemeldungseinheit dazu ausgebildet, bei Vorliegen eines festgestellten Prozesszustandes und einer Anzahl von zugeordneten Systemzuständen, als eine erste Diagnosemeldung zunächst eine Prozessdiagnosemeldung bereitzustellen und bei Vorliegen einer Systemdiagnoseanforderung als eine zweite Diagnosemeldung zusätzlich eine Anzahl von Systemdiagnosemeldungen bereitzustellen, wobei die Prozessdiagnosemeldung den festgestellten Prozesszustand repräsentiert und die Anzahl von Systemdiagnosemeldungen die Anzahl von zugeordneten Systemzuständen repräsentieren.

Diese Maßnahme sieht vor, die Diagnosemeldungen in zwei Schritten bereitzustellen. In einem ersten Schritt wird lediglich die Prozessdiagnosemeldung bereitgestellt. Liegt eine Systemdiagnoseanforderung vor, so werden in einem zweiten Schritt eine Anzahl von Systemdiagnosemeldungen bereitgestellt. Somit ist sichergestellt, dass durch das Bereitstellen von Diagnosemeldungen nicht unnötig Rechnerleistung gebunden ist. Gemäß diesem Ansatz muss für das Bereitstellen der Systemdiagnosemeldungen nur dann Rechnerleistung aufgebracht werden, wenn eine Systemdiagnoseanforderung vorliegt.

In einer weiteren Ausgestaltung der zuvor genannten Maßnahme ist die Anzeigeeinheit dazu ausgebildet, die Prozessdiagnosemeldung durch zumindest eine der Anzahl von Systemdiagnosemeldungen zu ersetzen oder zumindest eine der Anzahl von Systemdiagnosemeldungen ergänzend zu der Prozessdiagnosemeldung anzuzeigen.

Diese Maßnahme ermöglicht eine umfassende und zudem übersichtliche Unterrichtung des Bedienpersonals einer Anlage.

In einer weiteren Ausgestaltung der zuvor genannten Maßnahme ist der Anzeigeeinheit eine Systemdiagnoseanforderungseinheit zugeordnet, wobei die Systemdiagnoseanforderungseinheit dazu ausgebildet ist, eine Systemdiagnoseanforderung zu erfassen.

Diese Maßnahme ermöglicht einer Person, die die Anzeigeeinheit abliest, in einfacher Art und Weise eine Systemdiagnoseanforderung abzusitzen, um bei Bedarf Systemdiagnosemeldungen angezeigt zu bekommen. Vorteilhafterweise bilden die Anzeigeeinheit und die Systemdiagnoseanforderungseinheit eine bauliche Einheit.

In einer bevorzugten Ausgestaltung der Erfindung ist die Prozessdiagnoseauswerteeinheit dazu ausgebildet, fortlaufend festzustellen, welcher von mehreren Prozesszuständen zu einem definierten Zeitpunkt jeweils vorliegt, und/oder dass die Systemdiagnoseauswerteeinheit dazu ausgebildet ist, fortlaufend festzustellen, welcher von mehreren Systemzuständen zu einem definierten Zeitpunkt jeweils vorliegt.

Durch diese Maßnahme ist sichergestellt, dass nicht nur in einem kleinen Zeitintervall Diagnosemeldungen erstellt werden, sondern fortlaufend und somit über einen längeren Zeitraum, beispielsweise während des gesamten Betriebs der Anlage. Somit ist sichergestellt, dass das Bedienpersonal der Anlage auch in zeitlicher Hinsicht umfassend über auftretende Störungen unterrichtet wird. Die definierten Zeitpunkte, zu denen festgestellt wird, welcher von mehreren Prozesszuständen jeweils vorliegt, sind durch den ersten definierten Zeitpunkt und beispielsweise die Taktrate, mit der die Sicherheitssteuerung arbeitet, festgelegt. Entsprechendes gilt für die Systemzustände, allerdings bezogen auf den zweiten definierten Zeitpunkt.

In einer weiteren Ausgestaltung der zuvor genannten Maßnahme weist die Diagnosemeldungseinheit eine Zustandsspeichereinheit auf, die dazu ausgebildet ist, festgestellte Prozesszustände und festgestellte Systemzustände fortlaufend abzuspeichern, wobei die Diagnosemeldungseinheit dazu ausgebildet ist, bei dem Ermitteln, ob es sich bei dem abzuspeichernden Systemzustand um einen zugeordneten Systemzustand handelt und/oder bei dem Ermitteln, ob für einen abzuspeichernden Prozesszustand zugeordnete Systemzustände vorliegen, bereits abgespeicherte festgestellte Systemzustände und/oder bereits abgespeicherte festgestellte Prozesszustände zu berücksichtigen.

Diese Maßnahme ermöglicht, Prozesszustände und Systemzustände, die in einem zeitlich großen Abstand festgestellt wurden, zusammenzuführen, d.h. diejenigen Systemzustände zu ermitteln, die einem Prozesszustand zugeordnet sind und entsprechende Diagnosemeldungen bereitzustellen. Denn es ist folgende Konstellation denkbar: Zu einem früheren Zeitpunkt wird bereits ein Systemzustand und somit ein physikalischer Fehler festgestellt, weil beispielsweise ein Sensor defekt ist. Zu diesem Zeitpunkt wird aber noch kein Prozesszustand, d.h. logischer Fehler festgestellt, weil zu diesem Zeitpunkt beispielsweise eine in dem Anwenderprogramm enthaltene Routine, in der das von dem Sensor bereitgestellte Signal verarbeitet wird, noch gar nicht aufgerufen worden ist. In diesem Fall kann ein Zusammenführen von Prozesszustand und Systemzustand erfolgen. Insgesamt ermöglicht diese Maßnahme eine umfassende Unterrichtung des Bedienpersonals einer Anlage.

Vorteilhafterweise erfolgt das Berücksichtigen bereits abgespeicherter festgestellter Systemzustände und/oder bereits abgespeicherter festgestellter Prozesszustände dadurch, dass bei dem Ermitteln einer Zuordnungsgröße für einen abzuspeichernden Systemzustand und/oder für einen abzuspeichernden Prozesszustand bereits abgespeicherte festgestellte Systemzustände und/oder bereits abgespeicherte festgestellte Prozesszustände berücksichtigt werden. Zum einen werden diejenigen Zuordnungsgrößen ausgewählt, die diejenigen vordefinierten Zuordnungen repräsentieren, die anzeigen, zu welchen Prozesszuständen der abzuspeichernde Systemzustand zugeordnet ist, und zum anderen werden diejenigen Zuordnungsgrößen ausgewählt, die diejenigen vordefinierten Zuordnungen repräsentieren, die anzeigen, welche Systemzustände dem abzuspeichernden Prozesszustand zugeordnet sind. Dabei wird vorteilhafterweise berücksichtigt, welche der Zuordnungsgrößen bereits zu einem früheren Zeitpunkt ausgewählt wurden. Somit wird eine erneute Anzeige von Diagnosemeldungen vermieden.

Vorteilhafterweise werden zusätzlich zu den festgestellten Prozesszuständen auch diejenigen Prozessdiagnosemeldungen abgespeichert, die diese Prozesszustände repräsentieren. Ebenso werden zu den festgestellten Systemzuständen auch diejenigen Systemdiagnosemeldungen abgespeichert, die diese Systemzustände repräsentieren.

Das fortlaufende Abspeichern der festgestellten Prozesszustände und der festgestellten Systemzustände in der Zustandsspeichereinheit hat weitere Vorteile. So ist es möglich, eine Meldung über den aktuellen Status der zu steuernden Anlage und/oder der Sicherheitssteuerung bereitzustellen. Dabei können neben den aktuell festgestellten Prozesszuständen und den aktuell festgestellten Systemzuständen auch bereits festgestellte Prozesszustände und bereits festgestellte Systemzustände, die in der Zustandsspeichereinheit abgespeichert sind, berücksichtigt werden. Zudem ist es möglich, eine Meldung bereitzustellen, die eine Änderung des Status repräsentiert. Ferner kann eine Auswertung und somit Diagnose dahingehend durchgeführt werden, welche Diagnosemeldungen aktuell anstehen. Darüber hinaus kann ein Ereignisbericht erstellt werden, der Angaben dazu enthält, zu welchem Zeitpunkt eine Diagnosemeldung erschienen, d.h. bereitgestellt wurde, und zu welchem Zeitpunkt eine Diagnosemeldung wieder verschwunden ist, d.h. diejenige Störung, die durch die Diagnosemeldung repräsentiert wird, behoben wurde.

In einer bevorzugten Ausgestaltung der Erfindung weist die Steuerungseinheit eine Ein-/Ausgabeeinheit mit mehreren Eingängen und mit mehreren Ausgängen auf, wobei die Ein-/Ausgabeeinheit dazu ausgebildet ist, über eine Anzahl der mehreren Eingänge jeweils zumindest eines der Vielzahl von Steuerungseinganssignalen aufzunehmen und über eine Anzahl der mehreren Ausgänge jeweils zumindest eines der Vielzahl von Steuerungsausgangssignalen auszugeben, wobei das Anwenderprogramm mehrere Programmvariablen umfasst, wobei die mehreren Programmvariablen eine Vielzahl von Eingangsvariablen und eine Vielzahl von Ausgangsvariablen umfassen, wobei gemäß einer bei dem Erstellen des Anwenderprogramms definierten Zuordnungsregel zum einen die Eingangsvariablen jeweils einem der Eingänge und einem über diesen Eingang aufgenommenen Steuerungseingangssignal und zum anderen die Ausgangsvariablen jeweils einem der Ausgänge und einem über diesen Ausgang ausgegebenen Steuerungsausgangssignal zugeordnet sind, wobei die hinterlegten Zuordnungsgrößen in Abhängigkeit der Zuordnungsregel erstellt sind.

Diese Maßnahme ermöglicht es, in einfacher Art und Weise und ohne großen Aufwand die hinterlegten Zuordnungsgrößen, genauer gesagt die vordefinierten Zuordnungen, zu ermitteln. Ein Teilschritt beim Erstellen eines Anwenderprogramms ist auf jeden Fall das Zuordnen der Eingangsvariablen zu den Steuerungseingangssignalen und somit den Eingangsklemmen der Sicherheitssteuerung und das Zuordnen der Ausgangsvariablen zu den Steuerungsausgangssignalen und somit den Ausgangsklemmen der Sicherheitssteuerung, denn ohne diese Zuordnungen ist ein Steuern der Anlage durch das Anwenderprogramm nicht möglich. Dieses Zuordnen wird üblicherweise als I/O-Mapping bezeichnet. Durch dieses Zuordnen ist die Verknüpfung zwischen einerseits dem Prozess, der durch die Eingangsvariablen und die Ausgangsvariablen repräsentiert wird, und andererseits des Systems, das durch die Steuerungseingangssignale und die Steuerungsausgangssignale bzw. die Eingangsklemmen und die Ausgangsklemmen der Sicherheitssteuerung repräsentiert wird, bekannt. Somit kann dieses Zuordnen als Grundlage für das Verknüpfen der Prozesszustände und der Systemzustände, genauer gesagt das Zuordnen von Systemzuständen zu Prozesszuständen verwendet werden. Die Reihenfolge, d.h. ob eine Variable einem Signal und somit einer Klemme oder ob eine Variable einer Klemme und somit einem Signal zugeordnet ist, ist dabei unerheblich. Wichtig ist nur, dass diese drei Angaben zusammengebracht werden.

Anhand des nachfolgenden Beispiels soll die Wirkungsweise verdeutlicht werden. Liegt beispielsweise an einer Eingangsklemme ein Fehler vor, ein sog. physikalischer Fehler, so wird ein entsprechender Systemzustand festgestellt. Aufgrund des Fehlers an der Eingangsklemme ist zwangsläufig auch die zugehörige Eingangsvariable fehlerhaft. Wird nun unter Verwendung dieser Eingangsvariable eine Grenzwertbetrachtung durchgeführt, die Grundlage für das Feststellen eines Prozesszustandes ist, so wird aufgrund der fehlerhaften Eingangsvariable ein logischer Fehler erkannt und somit ein Prozesszustand festgestellt. Aufgrund der für das I/O-Mapping verwendeten Zuordnungsinformation steht nun fest, dass der festgestellte Systemzustand dem festgestellten Prozesszustand zugeordnet ist.

Es bleibt vorbehalten, den Ansatz, der der vorstehend bestimmenden Maßnahme zugrunde liegt, auch in einer eigenständigen Anmeldung weiterzuverfolgen.

In einer bevorzugten Ausgestaltung der Erfindung wird das Anwenderprogramm durch Bereitstellen einer Vielzahl von Softwarekomponenten erstellt, wobei die Vielzahl der Softwarekomponenten der Vielzahl von Anlagenhardwarekomponenten entsprechen, wobei zumindest einer Anzahl der Softwarekomponenten jeweils eine Anzahl der mehreren Prozesszustände sowie eine Anzahl von Prozessdiagnosemeldungen zugeordnet sind, wobei die Anzahl von Prozessdiagnosemeldungen die Anzahl der mehreren Prozesszustände repräsentieren.

Diese Maßnahme ermöglicht es, in einfacher Art und Weise ein Anwenderprogramm zu erstellen. Die Zuordnung von Prozesszuständen und von Prozessdiagnosemeldungen, die die Prozesszustände repräsentieren, zu einzelnen Softwarekomponenten hat mehrere Vorteile. Durch die Verwendung von Softwarekomponenten, denen Prozesszustände und diese Prozesszustände repräsentierende Prozessdiagnosemeldungen zugeordnet sind, wird innerhalb eines Anwenderprogrammes Einheitlichkeit in der Form gewährleistet, dass für in der zu steuernden Anlage enthaltene identische Anlagenhardwarekomponenten, bei entsprechender Auswahl, untereinander hinsichtlich der Prozessdiagnose identische Softwarekomponenten bereitgestellt werden. Was letztlich auch zu einer Erhöhung der Fehlersicherheit beiträgt.

In einer bevorzugten Ausgestaltung der Erfindung weist das Anwenderprogramm einen hierarchisch strukturierten Aufbau mit mehreren Hierarchieebenen auf, wobei bei dem Erstellen des Anwenderprogramms eine Anlagenstrukturgröße ermittelt wird, die den hierarchisch strukturierten Aufbau des Anwenderprogramms repräsentiert, wobei die Diagnosemeldungseinheit dazu ausgebildet ist, die Anzahl von Diagnosemeldungen in Abhängigkeit der Anlagenstrukturgröße bereitzustellen.

In einzelnen Hierarchieebenen sind jeweils eine Anzahl von Softwarekomponenten zugeordnet, wobei jede dieser Softwarekomponenten einer Anlagenhardwarekomponente entspricht. Handelt es sich bei der Anlagenhardwarekomponente um eine einfache Komponente, so ist die hier entsprechende Softwarekomponente als Elementarkomponente ausgeführt, die selbst keine weiteren Softwarekomponenten enthält. Handelt es sich dagegen bei der Anlagenhardwarekomponente um eine komplexe Komponente, so ist die hier entsprechende Softwarekomponente als Gruppenkomponente ausgebildet, und selbst wiederum Softwarekomponenten enthält. Die Gruppenkomponenten führen zu dem hierarchisch strukturierten Aufbau des Anwenderprogramms, der wiederum dem Aufbau der zu steuernden Anlage entspricht.

Das Bereitstellen der Anzahl von Diagnosemeldungen in Abhängigkeit der Anlagenstrukturgröße hat folgenden Vorteil: Ein festgestellter Prozesszustand ist eindeutig einer Softwarekomponente zugeordnet. Folglich kann für den festgestellten Prozesszustand eine Diagnosemeldung bereitgestellt werden, die in der Softwarekomponente hinterlegt ist, der er zugeordnet ist. Aufgrund der Anlagenstrukturgröße wiederum ist bekannt, welcher Softwarekomponente der nächsthöheren Hierarchieebene oder einer noch höher angesiedelten Hierarchieebene die Softwarekomponente strukturbedingt zugeordnet ist, der eher der festgestellte Prozesszustand zugeordnet ist. Diese strukturbedingte Zuordnung kann nun dazu verwendet werden, anstelle der Diagnosemeldung, die in der Softwarekomponente hinterlegt ist, der der festgestellte Prozesszustand zugeordnet ist, eine Diagnosemeldung bereitzustellen, die in einer Softwarekomponente hinterlegt ist, die in der nächsthöheren oder einer noch höheren Hierarchieebene angesiedelt ist, und der die Softwarekomponente strukturbedingt zugeordnet ist, der der festgestellte Prozesszustand zugeordnet ist. Dieses Prinzip ermöglicht beispielsweise das Bereitstellen einer sog. Sammeldiagnosemeldung. Das Bereitstellen einer Sammeldiagnosemeldung bietet sich vorteilhafterweise in folgender Konstellation an: Es werden mehrere Prozesszustände festgestellt. Diese Prozesszustände sind nicht nur einer Softwarekomponente, sondern mehreren Softwarekomponenten zugeordnet. Diese Softwarekomponenten münden in der hierarchischen Struktur des Anwenderprogrammes in eine Softwarekomponente, die in einer höher gelegenen Hierarchieebene enthalten ist. Anstelle nun für jeden festgestellten Prozesszustand eine Diagnosemeldung bereitzustellen, kann eine Diagnosemeldung bereitgestellt werden, die in der Softwarekomponente enthalten ist, in die die anderen Softwarekomponenten münden. Insgesamt wird dadurch die Übersichtlichkeit beim Anzeigen von Diagnosemeldungen erhöht.

Es bleibt vorbehalten, den Ansatz, der der vorstehend beschriebenen Maßnahme zugrunde liegt, auch in einer eigenständigen Anmeldung weiterzuverfolgen.

In einer weiteren Ausgestaltung der Erfindung weist die Prozessdiagnoseauswerteeinheit eine Prozessdiagnosespeichereinheit auf, wobei in der Prozessdiagnosespeichereinheit die mehreren Prozesszustände sowie eine Anzahl von Prozessdiagnosemeldungen hinterlegt sind, wobei die Prozessdiagnosemeldungen jeweils einen der mehreren Prozesszustände repräsentieren, wobei die mehreren Prozesszustände und/oder die Prozessdiagnosemeldungen bei dem Erstellen des Anwenderprogramms erstellt werden. Ferner ist in der Prozessdiagnosespeichereinheit die Anlagenstrukturgröße hinterlegt.

Aufgrund dieser Maßnahme sind sämtliche für eine umfassende Prozessdiagnose erforderlichen Angaben zusammenhängend an einer zentralen Stelle hinterlegt. Dies ermöglicht ein rasches Feststellen von Prozesszuständen. Ferner können mögliche Fehlerquellen ausgeschlossen werden, die bei einer Hinterlegung der vorgenannten Angaben an mehreren Orten entstehen können.

In einer bevorzugten Ausgestaltung der Erfindung weist die Systemdiagnoseauswerteeinheit eine Systemdiagnosespeichereinheit auf, wobei in der Systemdiagnosespeichereinheit die mehreren Systemzustände sowie eine Anzahl von Systemdiagnosemeldungen hinterlegt sind, wobei die Systemdiagnosemeldungen jeweils einen der mehreren Systemzustände repräsentieren.

Diese Maßnahme hat den Vorteil, dass sämtliche für eine umfassende Systemdiagnose erforderlichen Angaben zentral hinterlegt sind. Somit ist auch in diesem Fall eine rasche Feststellung von Systemzuständen möglich. Auch werden mögliche Fehlerquellen ausgeschlossen, die bei einer Hinterlegung der vorgenannten Angaben auf mehrere Speicherorte auftreten können.

Vorteilhafterweise werden die mehreren Systemzustände sowie die Anzahl von Systemdiagnosemeldungen vom Hersteller der Sicherheitssteuerung definiert. Diese Maßnahme trägt zu einer Steigerung der Fehlersicherheit bei. Weiterhin ist es vorteilhaft, wenn sowohl die mehreren Systemzustände als auch die Anzahl von Systemdiagnosemeldungen unveränderbar in der Systemdiagnosespeichereinheit hinterlegt sind, und somit weder vom Betreiber der Anlage noch vom Ersteller des in der Sicherheitssteuerung ablaufenden Anwenderprogramme geändert werden können. Auch diese Maßnahme trägt zu einer Erhöhung der Fehlersicherheit bei.

In einer bevorzugten Ausgestaltung der Erfindung ist die Sicherheitssteuerung aus mehreren Steuerungshardwarekomponenten aufgebaut, wobei zumindest einer Anzahl der Steuerungshardwarekomponenten jeweils eine Anzahl der mehreren Systemzustände sowie eine Anzahl von Systemdiagnosemeldungen zugeordnet sind, wobei die Anzahl von Systemdiagnosemeldungen die Anzahl der mehreren Systemzustände repräsentieren.

Diese Maßnahme stellt sicher, dass einer Steuerungshardwarekomponente jeweils die relevanten Systemzustände sowie die diesen Systemzuständen zugeordneten Systemdiagnosemeldungen zugeordnet sind. Unter Berücksichtigung der definierten Zuordnungsregel ist somit eine eindeutige Zuordnung eines Systemzustandes zu einem Prozesszustand möglich.

In einer bevorzugten Ausgestaltung der Erfindung weist die Sicherheitssteuerung einen hierarchisch strukturierten Aufbau auf, wobei in der Systemdiagnosespeichereinheit eine Steuerungsstrukturgröße hinterlegt ist, die den hierarchisch strukturierten Aufbau der Sicherheitssteuerung repräsentiert, wobei die Diagnosemeldungseinheit dazu ausgebildet ist, die Anzahl von Diagnosemeldungen in Abhängigkeit der Steuerungsstrukturgröße bereitzustellen.

Diese Maßnahme ermöglicht auch für die Systemdiagnose das bereits weiter oben im Zusammenhang mit der Prozessdiagnose beschriebene Bereitstellen von Sammeldiagnosemeldungen. Folglich gelten hier die im Zusammenhang mit der Prozessdiagnose aufgezeigten Vorteile entsprechend.

Es bleibt vorbehalten, den Ansatz, der der vorstehend beschriebenen Maßnahme zugrunde liegt, auch in einer eigenständigen Anmeldung weiterzuverfolgen.

In einer weiteren Ausgestaltung der Erfindung weist das Anwenderprogramm zumindest ein Sicherheitssteuerungsmodul, in dem sicherheitsrelevante Steuerungseingangssignale fehlersicher verarbeitet werden, und zumindest ein Standardsteuerungsmodul, in dem überwiegend prozessrelevante Steuerungseingangssignale verarbeitet werden, auf.

Bei dieser Ausgestaltung umfasst die Vielzahl von Sensoren vorteilhafterweise eine erste Anzahl von Sensoren, die zur Erfassung sicherheitsrelevanter Größen ausgebildet sind, wobei diese sicherheitsrelevanten Größen mittels sicherheitsrelevanter Steuerungseingangssignale dem Sicherheitssteuerungsmodul zugeführt werden, und eine zweite Anzahl von Sensoren, die zur Erfassung von prozessrelevanten Größen ausgebildet sind, wobei diese prozessrelevanten Größen mittels prozessrelevanter Steuerungseingangssignale dem Standardsteuerungsmodul zugeführt werden. Des weiteren ist in dieser Ausgestaltung vorteilhafterweise vorgesehen, dass die Vielzahl von Steuerungsausgangssignalen eine erste Anzahl von Steuerungsausgangssignalen umfasst, die in dem Sicherheitssteuerungsmodul ermittelt werden, und die für die Ansteuerung einer ersten Anzahl von Aktoren bestimmt sind, die zur Durchführung sicherheitsrelevanter Aktionen ausgebildet sind, und eine zweite Anzahl von Steuerungsausgangssignalen umfasst, die in dem Standardsteuerungsmodul ermittelt werden, und die für die Ansteuerung einer zweiten Anzahl von Aktoren bestimmt sind, die für die Durchführung prozessrelevanter Aktionen ausgebildet sind. Dieser Aufbau des Anwenderprogramms gemäß dem das Anwenderprogramm zumindest ein Sicherheitssteuerungsmodul und zumindest eine Standardsteuerungsmodul umfasst, ermöglicht, das mit ein und demselben Anwenderprogramm sowohl Steuerungsaufgaben, die dem Sicherheitsteuerungsaspekt zugeordnet sind, als auch Steuerungsaufgaben, die dem Standardsteuerungsaspekt zugeordnet sind, bearbeitet werden können. Somit können mit einer gemäß diesem Aspekt ausgestalteten Sicherheitssteuerung sowohl Steuerungsaufgaben, die dem Sicherheitssteuerungsaspekt zugeordnet sind, als auch Steuerungsaufgaben, die dem Standardsteuerungsaspekt zugeordnet sind, realisiert werden. Dies hat den Vorteil, dass für eine umfassende Steuerung einer Anlage, d.h. für eine Steuerung, die sowohl den Sicherheitssteuerungsaspekt als auch den Standardsteuerungsaspekt umfasst, lediglich ein Steuergerät erforderlich ist, und nicht zwei Steuergeräte, von denen eines die Steuerungsaufgaben bearbeitet, die dem Sicherheitssteuerungsaspekt zugeordnet sind, und eines die Steuerungsaufgaben bearbeitet, die dem Standardsteuerungsaspekt zugeordnet sind. Somit reduziert sich auch der für die Verdrahtung erforderliche Aufwand. Insgesamt stellt diese Maßnahme eine kostengünstige Möglichkeit dar, eine umfassende Steuerung für eine Anlage zu realisieren. An dieser Stelle sei darauf hingewiesen, dass mit der Formulierung, dass in dem Standardsteuerungsmodul überwiegend prozessrelevante Steuerungseingangssignale verarbeitet werden, gemeint ist, dass in dem Standardsteuerungsmodul auch sicherheitsrelevante Steuerungseingangssignale verarbeitet werden können.

Vorteilhafterweise handelt es sich bei der Ansageeinheit um eine in den Leitstand der zu steuernden Anlage integrierte Anzeigeeinheit. Es kann sich aber auch um eine weitere Anzeigeeinheit handeln, die zusätzlich zu der im Leitstand integrierten Anzeigeeinheit in der zu steuernden Anlage vorhanden ist. Die Anzeigeeinheit kann beispielsweise als LCD-Bildschirm, als Kathodenstrahl-basierter Bildschirm oder als alphanumerisches Textfeld ausgeführt sein.

Der Vollständigkeit halber sei an dieser Stelle folgender Hinweis angebracht: Wurde ein Prozesszustand festgestellt und wurden keine diesem Prozesszustand zugeordneten Systemzustände festgestellt, so wird als Diagnosemeldung diejenige Prozessdiagnosemeldung bereitgestellt, die den festgestellten Prozesszustand repräsentiert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine schematische Darstellung einer zu steuernden Anlage,

Fig. 2 eine schematische Darstellung einer Teilkomponente der zu steuernden Anlage,

Fig. 3 eine schematische Darstellung einer in der Teilkomponente enthaltenen Unterkomponente und deren Einzelkomponenten,

Fig. 4 eine vereinfachte Darstellung einer grafischen Oberfläche zum Erstellen eines Anwenderprogramms,

Fig. 5 eine schematische Darstellung der für die zu steuernde Anlage in einer obersten Hierarchieebene des Anwenderprogrammes bereitgestellten Softwarekomponenten und Aspektblöcke,

Fig. 6 eine schematische Darstellung der für die Teilkomponente bereitgestellten Softwarekomponenten und Aspektblöcke,

Fig. 7 eine schematische Darstellung der für die Unterkomponente bereitgestellten Softwarekomponenten und Aspektblöcke,

Fig. 8 eine schematische Darstellung der für eine in der Unterkomponente enthaltenen Einzelkomponente bereitgestellten Aspektblöcke,

Fig. 9 in einer Übersichtsdarstellung die hierarchische Struktur eines erstellten Anwenderprogramms,

Fig. 10 in einer Übersichtsdarstellung die hierarchische Struktur einer Sicherheitssteuerung,

Fig. 11 eine schematische Darstellung einer erfindungsgemäßen Sicherheitssteuerung.

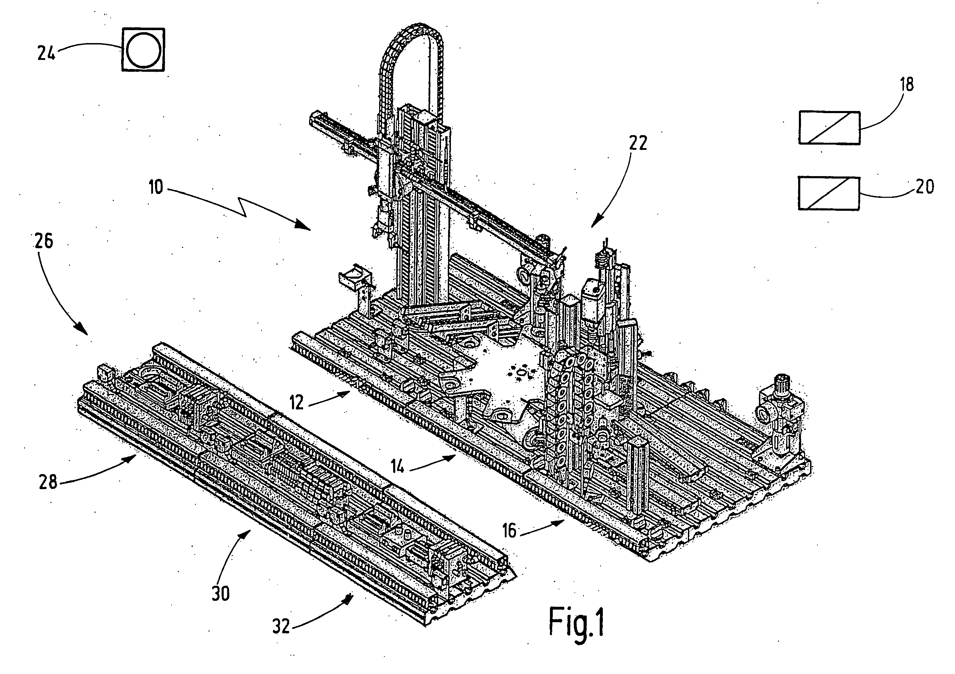

In Fig. 1 ist eine zu steuernde Anlage in ihrer Gesamtheit mit der Bezugsziffer 10 bezeichnet. Die Anlage 10 umfasst drei Teilkomponenten, nämlich eine Handlingstation 12, eine Prozessstation 14 und eine Teststation 16, sowie zwei Schütze 18,20. Mit der Handlingstation 12 wird die Prozessstation 14 mit Werkstücken befüllt. Diese Werkstücke werden in der Prozessstation 14 bearbeitet. Anschließend werden die bearbeiteten Werkstücke von der Handlingstation 12 an die Teststation 16 weitergegeben, in der überprüft wird, ob das bearbeitete Werkstück entsprechende Prüfkriterien erfüllt. Werden diese Prüfungen bestanden, kann die Prozessstation 14 wieder mit einem neuen zu bearbeitenden Werkstück befüllt werden. Über die beiden Schütze 18,20 sind die Verbraucher 22 der Anlage 10 mit einer nicht dargestellten Stromversorgung verbunden. Der Anlage ist ein erster Not-Aus-Taster 24 zugeordnet, mit dem im Gefahrenfall die Anlage 10 abgeschaltet und dabei in einen sicheren Zustand überführt werden kann. Hierzu werden die beiden Schütze 18,20 so angesteuert, dass die Verbraucher 22 von der Stromversorgung getrennt werden. Die Anlage 10 wird durch eine Sicherheitssteuerung 26 gesteuert, wobei die Sicherheitssteuerung 26 aus mehreren Steuerungshardwarekomponenten 28,30,32 aufgebaut ist. Die einzelnen Steuerungshardwarekomponenten können einzelnen Teilkomponenten zugeordnet sein, dies muss aber nicht zwingend der Fall sein. Im vorliegenden Ausführungsbeispiel soll die Steuerungshardwarekomponente 28 der Teilkomponente 12, die Steuerungshardwarekomponente 30 der Teilkomponente 14 und die Steuerungshardwarekomponente 32 der Teilkomponente 16 zugeordnet sein. Da es sich um eine schematische Darstellung handelt, wurde auf die Berücksichtigung von Verdrahtungen verzichtet.

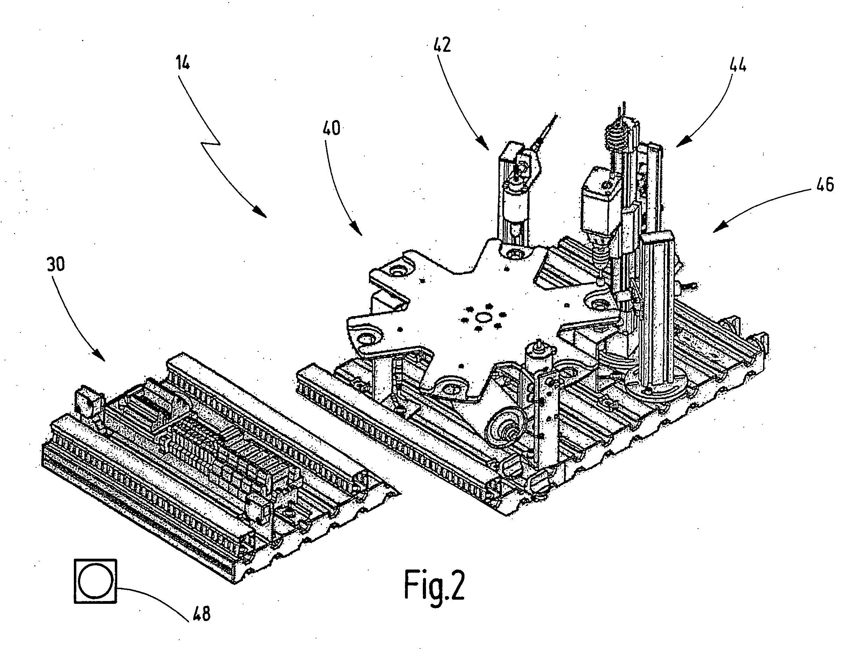

In Fig. 2 ist die Teilkomponente Prozessstation in ihrer Gesamtheit mit der Bezugsziffer 14 bezeichnet. Dass nachfolgend lediglich die Prozessstation und die in ihr enthaltenen Hardware-Komponenten betrachtet werden, soll keine einschränkende Wirkung haben. Die nachfolgenden Ausführungen gelten in entsprechender Weise auch für die Handlingstation 12 und die Teststation 16.

Die Prozessstation 14 umfasst einen Rundtisch 40, ein Prüfmodul 42, ein Bohrmodul 44 und ein Auswurfmodul 46. Mit dem Rundtisch 40 können in der Prozessstation 14 sämtliche Werkstücke zwischen den einzelnen Modulen 42, 44, 436 transportiert werden. Mit dem Prüfmodul 42 werden zu bearbeitende Werkstücke auf das Vorhandensein vorgegebener Eigenschaften überprüft. Mit dem Bohrmodul 44 werden die in der Prozessstation 14 befindlichen Werkstücke bearbeitet. Mit dem Auswurfmodul 46 werden die bearbeiteten Werkstücke entnommen und an die Teststation 16 weitergegeben. Der Prozessstation 14 ist ein zweiter Not-Aus-Taster 48 zugeordnet, mit dem im Gefahrenfall die Prozessstation 14 abgeschaltet und dabei in einen sicheren Zustand überführt werden kann.

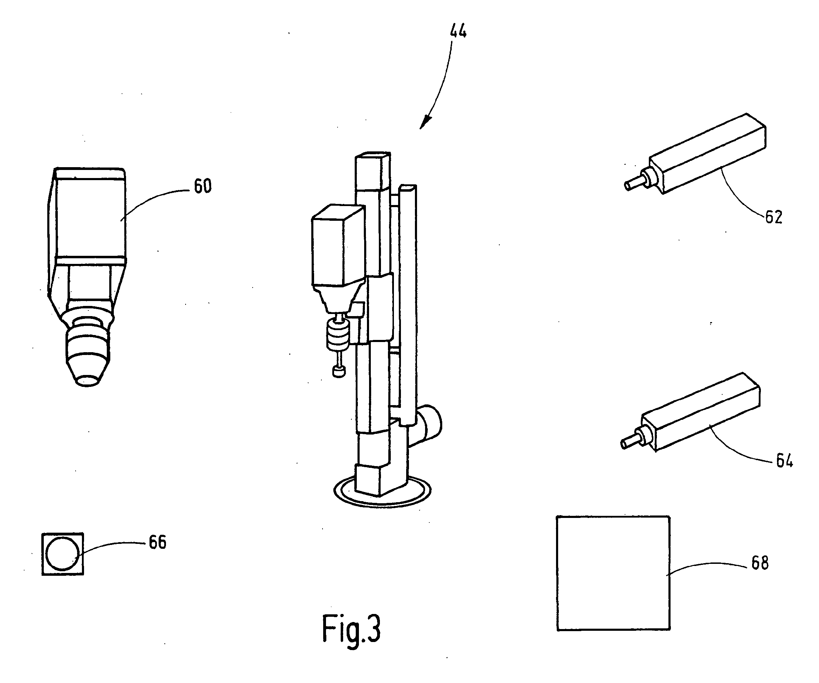

In Fig. 3 ist das Bohrmodul in seiner Gesamtheit mit der Bezugsziffer 44 bezeichnet.

Das Bohrmodul 44 weist als Einzelkomponenten mit einer mechanischen oder elektrischen oder elektromechanischen Funktion einen Motor 60, einen Transferzylinder 62 und einen Bohrzylinder 64 auf. Mit den beiden Zylindern 62, 64 kann der Motor 60 entlang einer Führungseinheit relativ zu dem zu bearbeitenden Werkstück bewegt werden, und zwar mit dem Bohrzylinder 64 in vertikaler Richtung und mit dem Transferzylinder 62 in horizontaler Richtung. Dem Bohrmodul 44 ist ein dritter Not-Aus-Taster 66 zugeordnet, mit dem im Gefahrenfall das Bohrmodul 44 abgeschaltet und dabei in einen sicheren Zustand überführt werden kann. Mit der Bezugsziffer 68 sind diejenigen Steuerungshardwarekomponenten bezeichnet, die in der Steuerungshardwarekomponente 30 enthalten sind, und die dem Bohrmodul 44 zugeordnet sind.

Wie den Darstellungen in den Fig. 1 bis 3 zu entnehmen ist, besteht die zu steuernde Anlage 10 aus einer Vielzahl von Anlagenhardwarekomponenten, nämlich zumindest aus den in Fig. 1 dargestellten Teilkomponenten 12,14,16, den in Fig. 2 dargestellten Komponenten Rundtisch 40, Prüfmodul 42, Bohrmodul 44 und Auswurfmodul 46 sowie den in Fig. 3 dargstellten Komponenten Motor 60, Transferzylinder 62 und Bohrzylinder 64. Hinzu kommen weitere Komponenten, nämlich diejenigen die in der Handlingstation 12 und in der Teststation 16 enthalten sind, auf die vorstehend jedoch nicht explizit eingegangen wurde.

Ebenso ist den Darstellungen in den Fig. 1 bis 3 zu entnehmen, dass die Sicherheitssteuerung aus mehreren Steuerungshardwarekomponenten besteht und insgesamt einen hierarchisch strukturierten Aufbau aufweist.

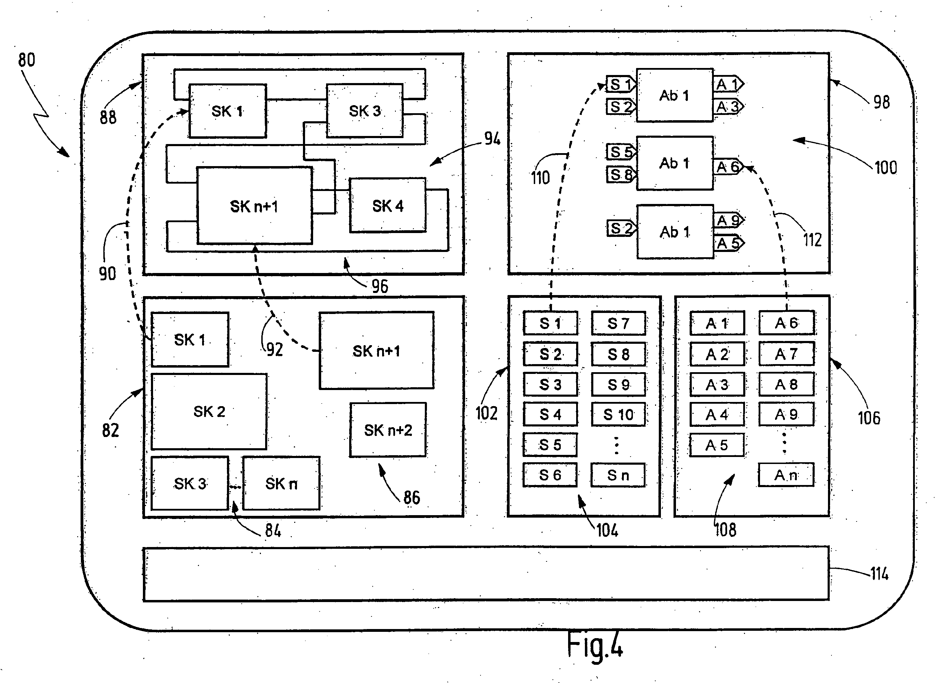

In Fig. 4 ist eine grafische Oberfläche in ihrer Gesamtheit mit der Bezugsziffer 80 bezeichnet. Diese grafische Oberfläche ermöglicht einem Programmierer das Erstellen eines Anwenderprogramms.

Die grafische Benutzeroberfläche 80 beinhaltet ein Softwarekomponenten-Feld 82, welches eine Menge 84 vordefinierter Softwarekomponenten in Form von grafischen Symbolen enthält. Die vordefinierten Softwarekomponenten wurden vom Anbieter des Computerprogramms, mit dem das Verfahren zum Erstellen eines Anwenderprogramms durchgeführt wird, erstellt und sind in einer in diesem Computerprogramm enthaltenen Datenbank abgelegt. Das Softwarekomponenten-Feld 82 enthält ferner eine Menge 86 neu erstellter Softwarekomponenten in Form von grafischen Symbolen. Bei den neu erstellten Softwarekomponenten handelt es sich um solche Softwarekomponenten, die vom Programmierer beim Erstellen des Anwenderprogramms für in der zu steuernden Anlage 10 enthaltene Anlagenhardwarekomponenten, für die keine entsprechende vordefinierte Softwarekomponente in der oben erwähnten Datenbank enthalten sind, erstellt werden. Die in dem Computerprogramm enthaltene Datenbank wird um diese Softwarekomponenten erweitert.

Diejenigen Softwarekomponenten, die selbst keine weiteren Softwarekomponenten enthalten, sind mit einem kleinen Block dargestellt. Diese Softwarekomponenten werden als Elementarkomponenten bezeichnet. Dagegen sind diejenigen Softwarekomponenten, die selbst weitere Softwarekomponenten enthalten, mit einem großen Block dargestellt. Diese Softwarekomponenten werden als Gruppenkomponenten bezeichnet.

Das Anwenderprogramm wird durch Bereitstellen einer Vielzahl von Softwarekomponenten erstellt. Zu diesem Zweck beinhaltet die grafische Benutzeroberfläche 80 ein Komponenten-Feld 88. Die bereitzustellen Softwarekomponenten werden ausgewählt und in das Komponenten-Feld 88 überführt, wie dies mittels zweier Pfeile 90,92 angedeutet ist. Das Auswählen und Überführen kann beispielsweise mittels einer sogenannten Drag & Drop-Funktion erfolgen.

Das Komponenten-Feld 88 enthält demzufolge eine Vielzahl 94 von Softwarekomponenten, die bereitgestellt wurden. Hierbei handelt es sich um die Softwarekomponenten der obersten Hierarchieebene des Anwenderprogramms. Durch logisches Verknüpfen der Vielzahl 94 von Softwarekomponenten wird ein Komponententeilprogramm erstellt. Hierzu werden zumindest ein Teil der Logikeingänge und zumindest ein Teil der Logikausgänge der Softwarekomponenten untereinander verbunden, was durch eine Vielzahl 96 von Verbindungen dargestellt ist. Aufgrund der in den Softwarekomponenten jeweils enthaltenen internen logischen Verknüpfungen werden, sofern in diesen Softwarekomponenten Elementarkomponenten und/oder Gruppenkomponenten enthalten sind, diese enthaltenen Softwarekomponenten automatisch mit verknüpft. Folglich reicht es aus, bei dem Erstellen des Komponententeilprogramms die in der obersten Hierarchieebene enthaltenen Softwarekomponenten untereinander logisch zu verknüpfen.

Das Anwenderprogramm ist hierarchisch strukturiert. Durch die bereitgestellte Vielzahl 94 von Softwarekomponenten wird eine oberste Hierarchieebene festgelegt. Enthält diese Vielzahl 94 von Softwarekomponenten eine Softwarekomponente, die als Gruppenkomponente ausgebildet ist, so wird durch die Anzahl von Softwarekomponenten, die in dieser Softwarekomponente enthalten ist, eine weitere, unterhalb der obersten Hierarchieebene liegende Hierarchieebene festgelegt.

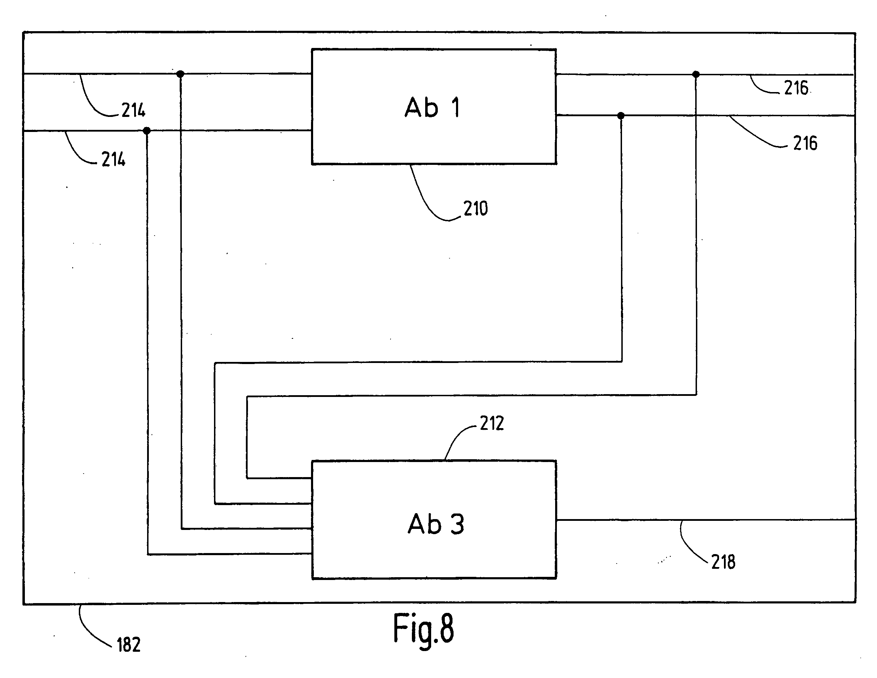

Bevor auf die weiteren in der grafischen Oberfläche 80 enthaltenen Felder eingegangen wird, soll zunächst der prinzipielle Aufbau einer Softwarekomponente dargelegt werden. Dies soll im Vorgriff anhand der noch zu beschreibenden Fig. 8 erfolgen.

Fig. 8 ist der prinzipielle Aufbau einer als Elementarkomponente ausgebildeten Softwarekomponente zu entnehmen. Eine Elementarkomponente enthält mehrere Aspektblöcke. Jeder dieser Aspektblöcke ist einem von mehreren untereinander unterschiedlichen Steuerungsaspekten zugeordnet, wobei jeder dieser Steuerungsaspekte einen eigenständigen Teilaspekt der Sicherheitssteuerung repräsentiert. Die Softwarekomponente enthält dabei all diejenigen Aspektblöcke, die für diejenige Anlagenhardwarekomponente von Bedeutung sind, die die Softwarekomponente repräsentiert. Somit wird die Anlagenhardwarekomponente mit Blick auf die Teilaspekte der Sicherheitssteuerung durch die sie repräsentierende Softwarekomponente vollständig beschrieben. Im Vergleich zu einer Elementarkomponente enthält eine Gruppenkomponente neben den Aspektblöcken zusätzlich Softwarekomponenten, die als Elementar- oder als Gruppenkomponente ausgeführt sein können.

Vorteilhafterweise kann es sich bei den untereinander unterschiedlichen Steuerungsaspekten um folgende Steuerungsaspekte handeln: Standardsteuerungsaspekt, der den Teilaspekt Standardsteuerung repräsentiert; Sicherheitssteuerungsaspekt, der den Teilaspekt Sicherheitssteuerung repräsentiert; Diagnoseaspekt, der den Teilaspekt Diagnose repräsentiert; Visualisierungsaspekt, der den Teilaspekt Visualisierung repräsentiert; Antriebsregelungsaspekt, der den Teilsaspekt Antriebsregelung repräsentiert; Kühlungsaspekt, der den Teilaspekt Kühlung repräsentiert; Zugriffberechtigungsaspekt, der den Teilsaspekt Zugriffberechtigung repräsentiert; Wartungsaspekt, der den Teilsaspekt Wartung repräsentiert; Verriegelungsaspekt, der den Teilsaspekt Verriegelung repräsentiert; Handbetriebsaspekt, der den Teilsaspekt Handbetrieb repräsentiert; Datenverwaltungsaspekt, der den Teilsaspekt Datenverwaltung repräsentiert.

Für jeden in einer Softwarekomponente enthaltenen Aspektblock sind zumindest diejenigen Logikgrößen und/oder diejenigen Parameter und/oder diejenigen Sensorsignale, die zur Verarbeitung benötigt werden, und über zugehörigen Eingänge dem Aspektblock zuzuführen sind, und diejenigen Logikgrößen und/oder diejenigen Parameter und/oder diejenigen Ausgangssignale, die in der Anzahl von Aspektblöcken jeweils ermittelt, und die über zugehörigen Ausgänge von dem Aspektblock ausgegeben werden, zunächst dem Grunde nach festgelegt. Das Festlegen der konkreten Sensoren und/oder Aktuatoren, die mit dem jeweiligen Aspektblock zu verbinden sind, erfolgt letztlich erst beim Erstellen des Anwenderprogramms.

Ferner ist zumindest in einem Teil der in einer Softwarekomponente enthaltenen Aspektblöcke jeweils ein Funktionsprogramm hinterlegt, welches Aspekteigenschaften der Hardware-Komponente für denjenigen Steuerungsaspekt festgelegt, dem der jeweilige Aspektblock zugeordnet ist.

Die grafische Oberfläche 80 beinhaltet ferner ein Aspektfeld 98. In diesem Aspektfeld 98 sind eine Vielzahl 100 von Aspektblöcken angeordnet. Jeder dieser Aspektblöcke ist demselben Steuerungsaspekt zugeordnet. Im Ausführungsbeispiel soll es sich um den Standardsteuerungsaspekt handeln, der den Teilaspekt Standardsteuerung repräsentiert. Die Vielzahl 100 von Aspektblöcken umfasst die in sämtlichen Hierarchieebenen des Anwenderprogramms enthaltenen Aspektblöcke, die dem Standardsteuerungsaspekt zugeordnet sind, und zwar unabhängig davon, ob sie in einer der Hierarchieebenen eigenständig oder als Teil einer Softwarekomponente enthalten sind. Das Aspektfeld enthält auch die Aspektblöcke, die in der obersten Hierarchieebene des Anwenderprogramms enthalten sind.

Die grafische Oberfläche 80 beinhaltet weiter ein Sensorenfeld 102. In diesem Sensorenfeld 102 ist eine Vielzahl 104 von grafischen Sensorsymbolen angeordnet. Für jeden Sensor, der in der zu steuernden Anlage 10 enthalten ist, enthält das Sensorenfeld 102 ein zugehöriges grafisches Sensorsymbol. Die Vielzahl 104 von grafischen Sensorsymbolen repräsentieren sowohl die hinsichtlich des Sicherheitssteuerungsaspektes als auch die hinsichtlich des Standardsteuerungsaspektes in der zu steuernden Anlage 10 enthaltenen Sensoren. Als weiteres Feld enthält die grafische Oberfläche 80 ein Aktorenfeld 106. In diesem Aktorenfeld 106 ist eine Vielzahl 108 von grafischen Aktorensymbolen angeordnet. Für jeden Aktor, der in der zu steuernden Anlage 10 enthalten ist, enthält das Aktorenfeld 106 ein zugehöriges grafisches Aktorensymbol. Die Vielzahl 108 von grafischen Aktorensymbolen umfassen sowohl die hinsichtlich des Sicherheitssteuerungsaspektes als auch die hinsichtlich des Standardsteuerungsaspektes in der zu steuernden Anlage enthaltenen Aktoren.

Für die in dem Aspektfeld 98 enthaltene Vielzahl 100 von Aspektblöcken wird ein Aspektteilprogramm erstellt. Hierzu wird zumindest für einen Teil der in dem Aspektfeld 98 enthaltenen Aspektblöcke sowohl für deren Eingänge als auch für deren Ausgänge ein sog. I/O-Mapping durchgeführt. Das heißt zumindest einem Teil der Signaleingänge werden diejenigen Sensormittel zugeordnet, deren Sensorsignale in dem jeweiligen Aspektblock verarbeitet werden. Dies ist beispielhaft durch einen Pfeil 110 dargestellt. Außerdem werden zumindest einem Teil der Signalausgänge Aktoren zugeordnet, die mit den in dem jeweiligen Aspektblock ermittelten Ausgangssignalen angesteuert werden. Dies ist beispielhaft durch einen Pfeil 112 dargestellt. Alternativ kann das I/O-Mapping auch durch textuelle Eingaben in einem Eingabefeld 114 vorgenommen werden.

Bei dem vorstehend beschriebenen Verfahren zum Erstellen eines Anwenderprogramms sind sämtliche Programmvariablen in den Aspektblöcken enthalten. Folglich sind den Signaleingängen der Aspektblöcke in dem Anwenderprogramm enthaltene Eingangsvariablen und den Signalausgängen der Aspektblöcke in dem Anwenderprogramm enthaltene Ausgangsvariablen zugeordnet. Durch die Zuordnung der Sensoren zu den Signaleingängen ist somit die Zuordnung zwischen Sensoren und Eingangsvariable, genauer gesagt zwischen Steuerungseingangssignalen und Eingangsvariablen definiert. Da bekannt ist, welcher Sensor an welchen Eingang einer in der Sicherheitssteuerung enthaltenen Ein-/Ausgabeeinheit angeschlossen ist, ist somit insgesamt die Zuordnung zwischen Eingängen, Steuerungseingangssignalen und Eingangsvariablen definiert. Durch die Zuordnung der Aktoren zu den Signalausgängen ist ferner die Zuordnung zwischen Aktoren und Ausgangsvariable, genauer gesagt zwischen Steuerungsausgangsvariablen und Ausgangsvariablen definiert. Da bekannt ist, welcher Aktor an welchem Ausgang der Ein-/Ausgabeeinheit angeschlossen ist, ist somit die Zuordnung zwischen Ausgängen, Steuerungsausgangsvariablen und Ausgangsvariablen definiert.

Sind für alle Steuerungsaspekte die Aspektteilprogramme erstellt, so ist die Zuordnungsregel vollständig definiert und die zu hinterlegenden Zuordnungsgrößen können erstellt werden.

Insgesamt wird für jeden Steuerungsaspekt ein Aspektteilprogramm erstellt. Sind alle Aspektteilprogramme erstellt, werden das Komponententeilprogramm und die Aspektteilprogramme zu dem Anwenderprogramm zusammengefügt.

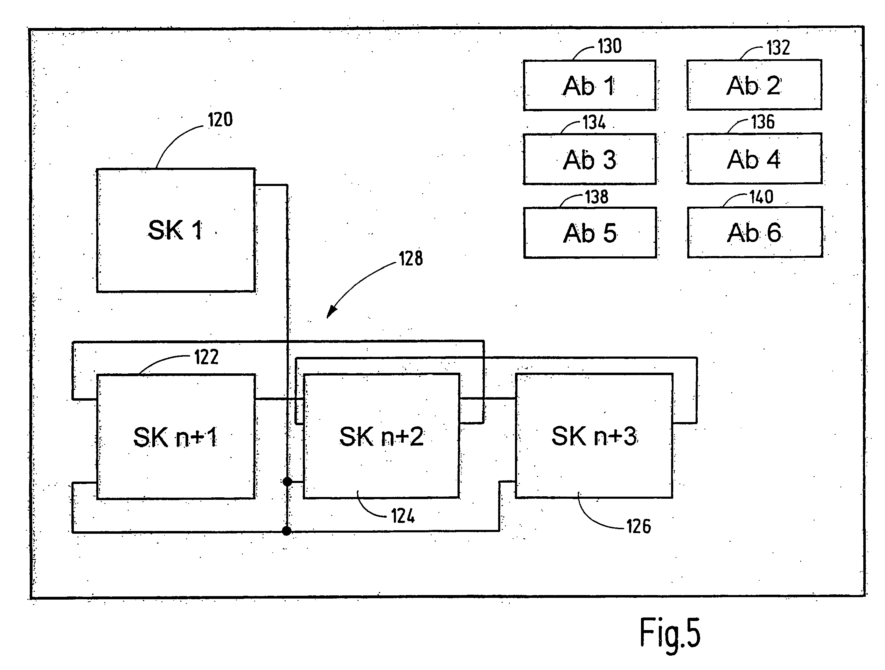

In Fig. 5 sind diejenigen Softwarekomponenten und Aspektblöcke für die zu steuernde Anlage 10 dargestellt, die in der obersten Hierarchieebene enthalten sind.

Im Einzelnen handelt es sich um folgende Softwarekomponenten: eine erste Softwarekomponente 120, die dem ersten Not-Aus-Taster 24 entspricht und als Einzelkomponente ausgebildet ist. Eine zweite Softwarekomponente 122, die der Handlingstation 12 entspricht. Eine dritte Softwarekomponente 124, die der Prozessstation 14 entspricht. Eine vierte Softwarekomponente 126, die der Teststation 16 entspricht. Wobei die Softwarekomponenten 122, 124, 126 jeweils als Gruppenkomponente ausgebildet sind. Jede der Softwarekomponenten 122, 124, 126 repräsentiert eine in der zu steuernden Anlage 10 vorhandene reale mechatronische Anlagenhardwarekomponente. Die Softwarekomponenten sind zur Realisierung einer Ablaufsteuerung untereinander mit einer ersten Vielzahl 128 von Logikverbindungen verbunden.

Ferner handelt es sich um folgende Aspektblöcke: einen ersten Aspektblock 130, der einem Standardsteuerungsaspekt zugeordnet ist, um einen zweiten Aspektblock 132, der einem Sicherheitssteuerungsaspekt zugeordnet ist, um einen dritten Aspektblock 134, der einem Diagnoseaspekt zugeordnet ist, um einen vierten Aspektblock 136, der einem Visualisierungsaspekt zugeordnet ist, um einen fünften Aspektblock 138, der einem Antriebsregelungsaspekt zugeordnet ist und um einen sechsten Aspektblock 140, der einem Verriegelungsaspekt zugeordnet ist.

In jedem dieser Aspektblöcke ist ein Funktionsprogramm hinterlegt, das zur Bearbeitung derjenigen Steuerungsaufgaben ausgebildet ist, die zu dem Steuerungsaspekt gehören, dem der jeweilige Aspektblock zugeordnet ist. In dem dritten Aspektblock 134 sind diejenigen Prüfbedingungen und Prozessdiagnosemeldungen hinterlegt, die zur Durchführung einer Prozessdiagnose für die zu steuernde Anlage 10 als solche erforderlich sind. Die zu steuernde Anlage 10 als solche ist durch den Verbund der Handlingstation 12, der Prozessstation 14 und der Teststation 16 und somit durch den Verbund der Softwarekomponenten 122,124,126 der obersten Hierarchieebene des Anwenderprogramms definiert. Auf die Darstellung von Logikverbindungen zwischen einzelnen Aspektblöcken untereinander bzw. zu einen Softwarekomponenten wurde aus Gründen der Übersichtlichkeit verzichtet.

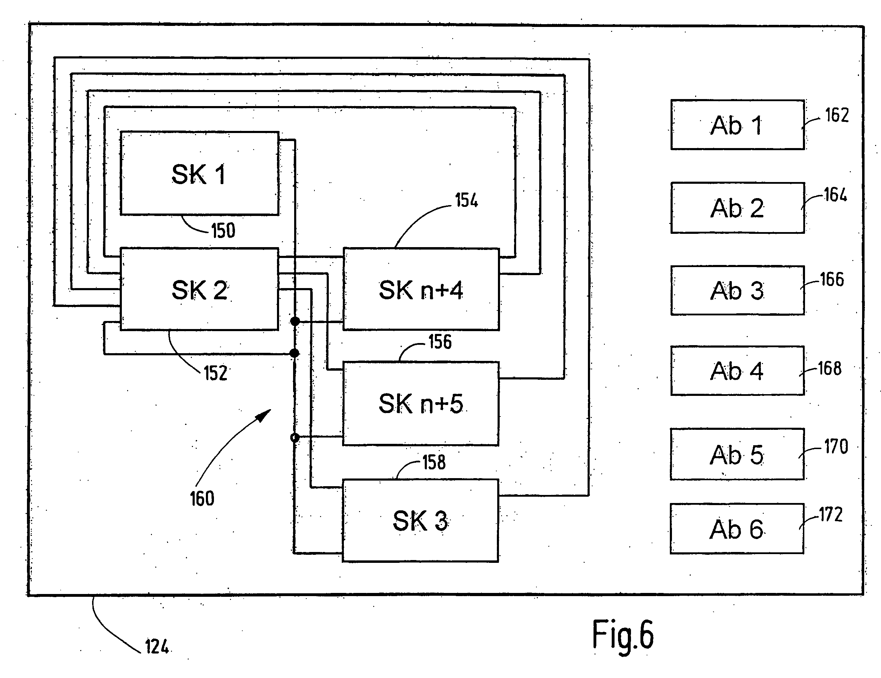

In Fig. 6 sind die in der dritten Softwarekomponente 124 enthaltenen Softwarekomponenten und Aspektblöcke dargestellt.

Mit der Bezugziffer 150 ist eine fünfte Softwarekomponente bezeichnet, die dem zweiten Not-Aus-Taster 48 entspricht und die als Elementarkomponente ausgebildet ist. Mit der Bezugsziffer 152 ist eine sechste Softwarekomponente bezeichnet, die dem Rundtisch 40 entspricht. Mit der Bezugsziffer 154 ist eine siebte Softwarekomponente bezeichnet, die dem Prüfmodul 42 entspricht. Mit der Bezugsziffer 156 ist eine achte Softwarekomponente bezeichnet, die dem Bohrmodul 44 entspricht. Mit der Bezugsziffer 158 ist eine neunte Softwarekomponente bezeichnet, die dem Auswurfmodul 46 entspricht. Die Softwarekomponenten 152, 154, 156, 158 sind als Gruppenkomponenten ausgebildet. Die Softwarekomponenten sind zur Realisierung einer Ablaufsteuerung untereinander mit einer zweiten Vielzahl 160 von Logikverbindungen verbunden. Auch die Softwarekomponenten 152,154,156,158 repräsentieren jeweils eine in der zu steuernden Anlage 10 vorhandene reale mechatronische Anlagenhardwarekomponente.

Zusätzlich weist die dritte Softwarekomponente 124 mehrere Aspektblöcke auf. Einen siebten Aspektblock 162, der dem Standardsteuerungsaspekt zugeordnet ist, einen achten Aspektblock 164, der dem Sicherheitssteuerungsaspekt zugeordnet ist, einen neuen Aspektblock 166, der dem Diagnoseaspekt zugeordnet ist, einen zehnten Aspektblock 168, der dem Visualisierungsaspekt zugeordnet ist, einen elften Aspektblock 170, der dem Antriebsregelungsaspekt zugeordnet ist und einen zwölften Aspektblock 172, der dem Verriegelungsaspekt zugeordnet ist. Auch in diesen Aspektblöcken ist jeweils ein Funktionsprogramm hinterlegt. In dem neunten Aspektblock 166 sind diejenigen Prüfbedingungen und Prozessdiagnosemeldungen hinterlegt, die zur Durchführung einer Prozessdiagnose für die Prozessstation 14 als solche erforderlich sind. Auf die Darstellung von Logikverbindungen zwischen einzelnen Aspektblöcken untereinander bzw. zu einen Softwarekomponenten wurde aus Gründen der Übersichtlichkeit verzichtet.

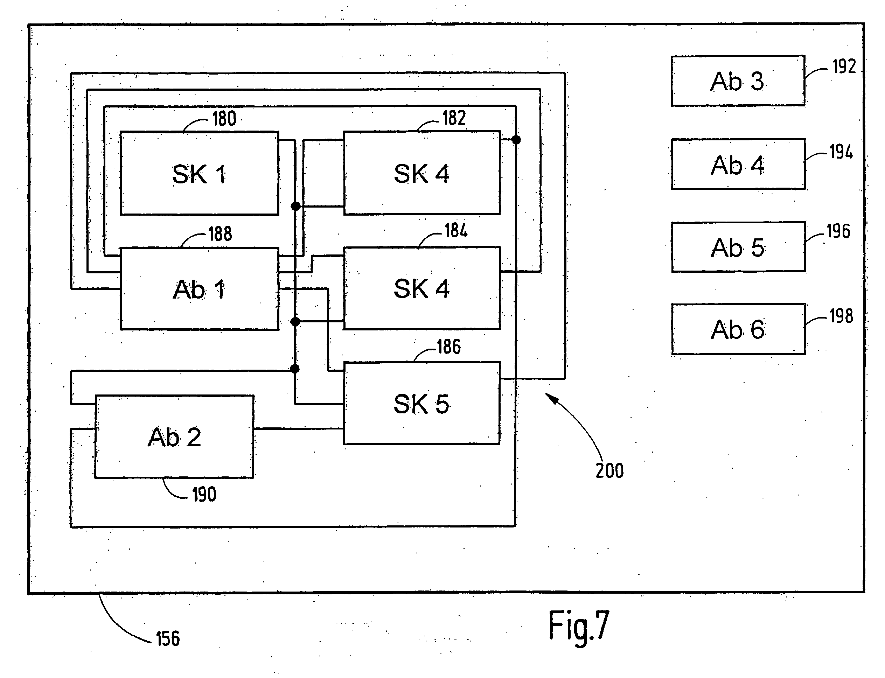

In Fig. 7 sind die in der achten Softwarekomponente 156 enthaltenen Softwarekomponenten und Aspektblöcke dargestellt. Es handelt sich hierbei um eine zehnte Softwarekomponente 180, die dem dritten Not-Aus-Taster 66 entspricht. Um eine elfte Softwarekomponente 182, die dem Bohrzylinder 64 entspricht, um eine zwölfte Softwarekomponente 184, die dem Transferzylinder 62 entspricht und um eine dreizehnte Softwarekomponente 186, die dem Motor 60 entspricht. Diese Softwarekomponenten sind als Elementarkomponenten ausgebildet.

Ferner enthält die achte Softwarekomponente 156 einen dreizehnten Aspektblock 188, der dem Standardsteuerungsaspekt zugeordnet ist, einen vierzehnten Aspektblock 190 der dem Sicherheitssteuerungsaspekt zugeordnet ist, einen fünfzehnten Aspektblock 192, der dem Diagnoseaspekt zugeordnet ist, einen sechzehnten Aspektblock 194, der dem Visualisierungsaspekt zugeordnet ist, einen siebzehnten Aspektblock 196, der dem Antriebsregelungsaspekt zugeordnet ist und einen achtzehnten Aspektblock 198, der dem Verriegelungsaspekt zugeordnet ist. In dem fünfzehnten Aspektblock 192 sind diejenigen Prüfbedingungen und Prozessdiagnosemeldungen hinterlegt, die zur Durchführung einer Prozessdiagnose für das Bohrmodul 44 als solche erforderlich sind.

Die Softwarekomponenten und ein Teil der Aspektblöcke sind zur Realisierung einer Ablaufsteuerung über eine Vielzahl von Logikverbindungen untereinander verbunden. Auf die vollständige Darstellung der Logikverbindungen wurde aus Gründen der Übersichtlichkeit verzichtet.

In Fig. 8 sind diejenigen Aspektblöcke dargestellt, die in einer Softwarekomponente enthalten sind, die einem in der zu steuernden Anlage 10 enthaltenen Zylinder entspricht. Im vorliegenden Ausführungsbeispiel ist dies beispielsweise die elfte Softwarekomponente 182. Dies soll jedoch keine einschränkende Wirkung haben, die nachfolgenden Ausführungen gelten ebenso die zwölft Softwarekomponente 184.

Die elfte Softwarekomponente 182 enthält einen neunzehnten Aspektblock 210, der dem Standardsteuerungsaspekt zugeordnet ist und einen zwanzigsten Aspektblock 212, der dem Diagnoseaspekt zugeordnet ist. Da die Arbeitsweise eines dem Diagnoseaspekt zugeordneten Aspektblockes anhand des Standardsteuerungsaspekts erläutert werden soll, sind in Fig. 8 keine weiteren Aspektblöcke dargestellt.

Dem neunzehnten Aspektblock 210 werden über vierte Logikverbindungen 214 Signale zugeführt, die von zwei Endlagesensoren erzeugt werden, und die jeweils anzeigen, dass der Bohrzylinder 64 eine der beiden möglichen Endlagen einnimmt. Diese beiden Signale werden ebenfalls dem zwanzigsten Aspektblock 2121 über die vierten Logikverbindungen 214 zugeführt. In dem neunzehnten Aspektblock 210 werden entsprechend dem in ihm hinterlegten Funktionsprogramm Steuerungsausgangssignale erzeugt, mit denen der Bohrzylinder 64 angesteuert werden. Diese Steuerungsausgangssignale werden dem zwanzigsten Aspektblock 212 über fünfte Logikverbindungen 216 zugeführt. Der zwanzigste Aspektblock 212 führt in Abhängigkeit der ihm zugeführten Signale eine Prozessdiagnose durch. Anhand dieser Prozessdiagnose können folgende Prozesszustände festgestellt werden: "Der Zylinder ist nicht eingefahren"; '"Der Zylinder ist nicht ausgefahren"; "Beide Endschalter sind betätigt". Die Prozessdiagnosemeldung, die den festgestellten Prozesszustand repräsentiert, wird über eine sechste Logikverbindung 218 ausgegeben.

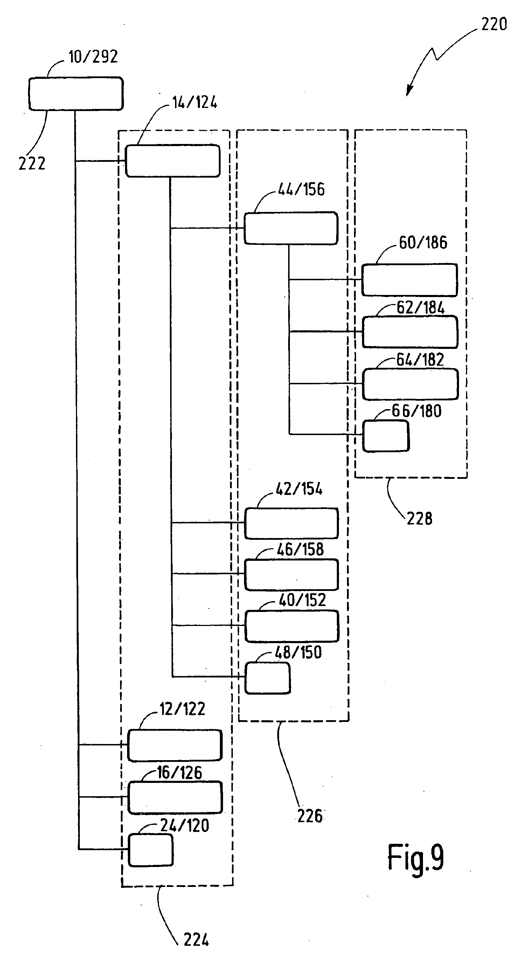

In Fig. 9 ist eine erste hierarchische Struktur in ihrer Gesamtheit mit der Bezugsziffer 220 bezeichnet.

Diese erste hierarchische Struktur repräsentiert sowohl diejenige hierarchische Struktur, die der zu steuernden Anlage 10 zugrunde liegt, als auch diejenige hierarchische Struktur, die dem Anwenderprogramm für die Sicherheitssteuerung zugrunde liegt. In der für Fig. 9 gewählten Darstellung hat jeder Block zwei Bedeutungen. Mit der vor dem Schrägstrich stehenden Bezugsziffer wird angegeben, welche Anlagenhardwarekomponente der zu steuernden Anlage 10 der jeweilige Block repräsentiert. Mit der nach dem Schrägstrich stehenden Bezugsziffer wird angegeben, welche Softwarekomponente der jeweilige Block in dem Anwenderprogramm repräsentiert.

Mit der Bezugsziffer 222 ist ein Block bezeichnet, der die zu steuernde Anlage 10 in ihrer Gesamtheit oder das Anwenderprogramm in seiner Gesamtheit repräsentiert. Mit der Bezugsziffer 224 ist eine oberste Anlagenhierarchieebene bezeichnet, deren Anlagenhardwarekomponenten als Teilkomponenten bezeichnet, werden Mit der Bezugsziffer 226 ist eine erste Anlagenhierarchieebene bezeichnet, die direkt unterhalb der obersten Anlagenhierarchieebene liegt und deren Anlagenhardwarekomponenten als Unterkomponenten bezeichnet werden. Mit der Bezugsziffer 228 ist eine zweite Anlagenhierarchieebene bezeichnet, die direkt unterhalb der ersten Anlagenhierarchieebene liegt und deren Anlagenhardwarekomponenten als Einzelkomponenten bezeichnet werden. In Fig. 9 ist nicht für jede dargestellte Teilkomponente die erste Anlagenhierarchieebene und nicht für jede dargestellte Unterkomponente die zweite Anlagenhierarchieebene dargestellt. Dies soll keine einschränkende Wirkung haben.

Den einzelnen in der Struktur enthalten Blöcken sind Prozesszustände und Prozessdiagnosemeldungen, die die Prozesszustände repräsentieren, zugeordnet. So ist beispielsweise dem Block 60/180 der Prozesszustand "Motorüberlastung" und die zugehörige Prozessdiagnosemeldung "Motor überlastet" zugeordnet. Den Blöcken 62/184 und 64/182 sind mehrere Prozesszustände zugeordnet. Ein erster Prozesszustand "Zylinderstellung" mit den beiden Prozessdiagnosemeldungen "Zylinder ist nicht eingefahren" und "Zylinder isst nicht ausgefahren". Ein zweiter Prozesszustand "Endlageschalter" mit der Prozessdiagnosemeldung "Beide Endlageschalter betätigt". Ein dritter Prozesszustand "Signalzustand" mit der Prozessdiagnosemeldung "Ungültiges Ein-/Ausgangssignal". Ein vierter Prozesszustand "Zeitbedingung" mit den beiden Prozessdiagnosemeldungen "Einfahrzeit überschritten" und "Ausfahrzeit überschritten". Den Blöcken 24/120, 48/150 und 66/180 sind zwei Prozesszustände zugeordnet. Ein erster Prozesszustand "Zustand" mit der Prozessdiagnosemeldung "Gedrückt" und ein zweiter Prozesszustand "Bestätigung" mit der Prozessdiagnosemeldung "Keine Bestätigung".

Auf Grund der hierarchischen Struktur können Prozesszustände, die beispielsweise in einem Block der zweiten Anlagenhierarchieebene auftreten, an den zugeordneten Block in der ersten Anlagenhierarchieebene oder gar der obersten Anlagenhierarchieebene weitergegeben werden.

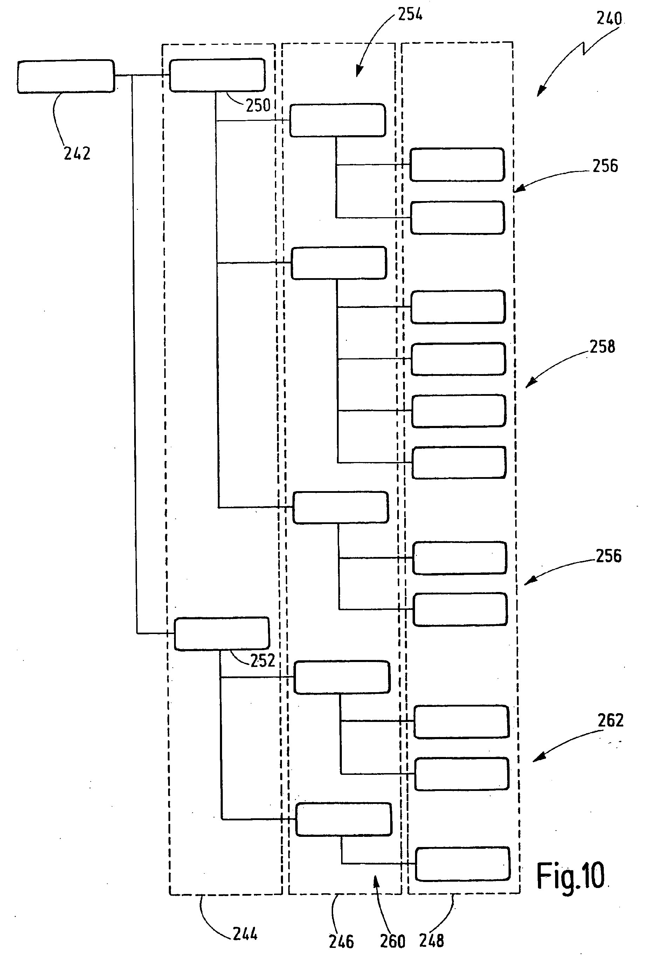

In Fig. 10 ist eine zweite hierarchische Struktur in ihrer Gesamtheit mit der Bezugsziffer 240 bezeichnet. Diese zweite hierarchische Struktur gibt den Aufbau der in der Sicherheitssteuerung enthaltenen Steuerungshardwarekomponenten 68 unter Berücksichtigung des dritten Not-Aus-Tasters 66 wieder. Also derjenigen Steuerungshardwarekomponenten, die dem Bohrmodul 44 zugeordnet sind. Die Beschränkung auf das Bohrmodul 44 soll keine einschränkende Wirkung haben. Selbstverständlich kann für die gesamte Sicherheitssteuerung, mit der die Anlage 10 gesteuert wird, eine entsprechende hierarchische Struktur angegeben werden.

Mit der Bezugsziffer 242 ist eine Logikeinheit bezeichnet, in der derjenige Teil des Anwenderprogramms abläuft, mit dem das Bohrmodul 44 gesteuert wird. Die Logikeinheit 242 definiert eine oberste Steuerungshierarchieebene. Mit der Bezugsziffer 244 ist eine erste Steuerungshierarchieebene bezeichnet, die direkt unterhalb der obersten Hierarchieebene liegt. Mit der Bezugsziffer 246 ist eine zweite Steuerungshierarchieebene bezeichnet, die direkt unterhalb der ersten Steuerungshierarchieebene liegt. Mit der Bezugsziffer 248 ist eine dritte Steuerungshierarchieebene bezeichnet, die direkt unterhalb der zweiten Steuerungshierarchieebene liegt.

In der ersten Steuerungshierarchieebene 244 sind eine Standardbuseinheit 250, die dem Standardsteuerungsaspekt zugeordnet ist, und eine Sicherheitsbuseinheit 252, die dem Sicherheitssteuerungsaspekt zugeordnet ist, enthalten. Über diese beiden Buseinheiten erfolgt die Datenübermittelung, getrennt nach sicherheitsrelevanten und nach prozessrelevanten Daten.

In der zweiten Steuerungshierarchieebene 246 ist eine erste Vielzahl 254 von Ein-/Ausgabemodulen angeordnet, die mit der Standardbuseinheit 250 verbunden sind. Diese Ein-/Ausgabemodule stellen eine Vielzahl 256 von Standardausgängen zur Verfügung, über die Steuerungsausgangssignale zur Ansteuerung von Aktoren ausgegeben werden können. Ferner stellen diese Ein-/Ausgabemodule eine Vielzahl 258 von Standardeingängen zur Verfügung, über die Steuerungseingangsignale aufgenommen werden können.

In der zweiten Steuerungshierarchieebene 246 ist ferner eine zweite Vielzahl 260 von Ein-/Ausgabemodulen angeordnet, die mit der Sicherheitsbuseinheit 252 verbunden sind. Diese Ein-/Ausgabemodule stellen eine Vielzahl 262 von Sicherheitseingängen und eine nicht dargestellte Vielzahl von Sicherheitsausgängen zur Verfügung.

Der dritten Steuerungshierarchieebene 248 können beispielsweise folgende Systerridiagnosemeldungen zugeordnet sein: "Hardwaredefekt", "Kurzschluss gegen 0V", "Kurzschluss gegen 24V". Der zweiten Steuerungshierarchieebene 246 können beispielsweise folgende Systemdiagnosemeldungen zugeordnet sein: "Modul fehlt", "Interner Fehler", "Fehler Versorgungsspannung". Sowohl der ersten Steuerungshierarchieebene 244 als auch der obersten Steuerungshierarchieebene können beispielsweise folgende Systemdiagnosemeldungen zugeordnet sein: "Interner Fehler", "Fehler Versorgungsspannung". Selbstverständlich können die einzelnen Systemdiagnosemeldungen den einzelnen Modulen oder Einheiten zugeordnet sein.

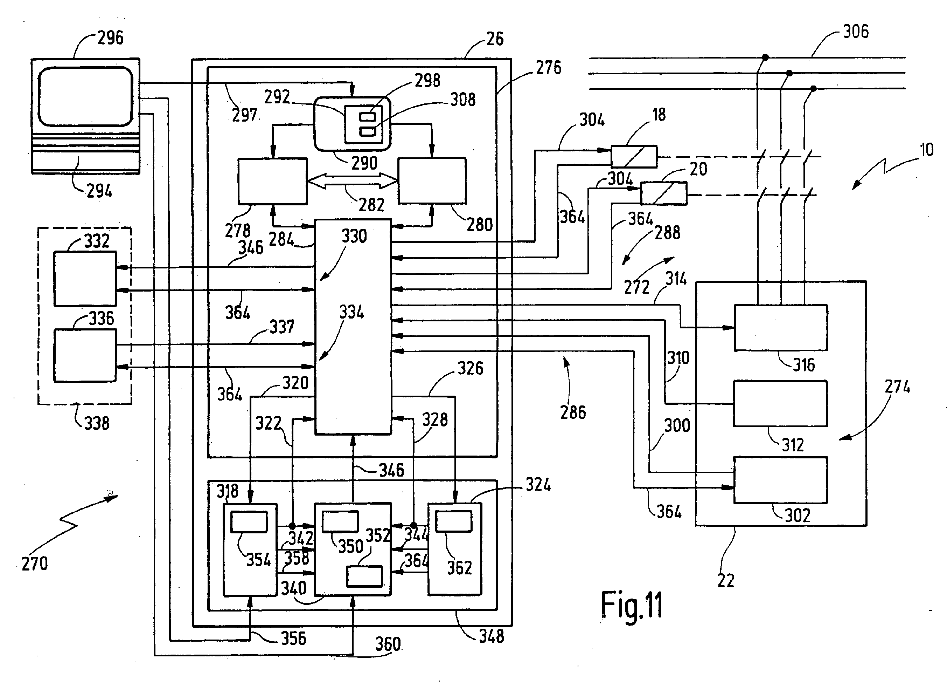

In Fig. 11 ist eine in ihrer Gesamtheit mit der Bezugsziffer 270 bezeichnete Sicherheitsschaltung dargestellt, die eine Sicherheitssteuerung 26 aufweist, die dazu ausgebildet ist, eine in ihrer Gesamtheit mit der Bezugsziffer 10 bezeichnete Anlage zu steuern. Die Anlage 10 umfasst eine Vielzahl 272 von Aktoren und eine Vielzahl 274 von Sensoren. Die in er Anlage 10 enthaltenen Verbraucher sind mit der Bezugsziffer 22 bezeichnet.

Die Sicherheitssteuerung 26 umfasst eine Steuerungseinheit 276. Die Steuerungseinheit 276 ist zweikanalig-redundant aufgebaut, um die erforderliche Fehlersicherheit zum Steuern sicherheitskritischer Prozesse zu erreichen. Stellvertretend für den zweikanaligen Aufbau sind in Fig. 11 zwei voneinander getrennte Prozessoren 278, 280 dargestellt, die über eine bidirektionale Kommunikationsschnittstelle 282 miteinander in Verbindung stehen, um sich gegenseitig kontrollieren und Daten austauschen zu können. Bevorzugt sind die beiden Kanäle der Steuerungseinheit 276 und die beiden Prozessoren 278, 280 diversitär, d.h. verschieden voneinander aufgebaut, um systematische Fehler weitgehend auszuschließen.

Mit der Bezugsziffer 284 ist eine Ein-/Ausgabeeinheit bezeichnet, die mit jedem der beiden Prozessoren 278, 280 in Verbindung steht. Die Ein-/Ausgabeeinheit 284 nimmt eine Vielzahl 286 von Steuerungseingangssignalen von der Vielzahl 274 von Sensoren auf und leitet diese in einem angepassten Datenformat an jeden der beiden Prozessoren 278, 280 weiter. Ferner erzeugt die Ein-/Ausgabeeinheit 284 in Abhängigkeit von den Prozessoren 278, 280 eine Vielzahl 288 von Steuerungsausgangssignalen, mit denen die Vielzahl 272 von Aktoren angesteuert werden.

Mit der Bezugsziffer 290 ist eine Chipkarte bezeichnet, auf der ein Anwenderprogramm 292 abgespeichert wird. Das Anwenderprogramm 292 wird mit Hilfe eines Programmiertools erstellt. Bei dem Programmiertool handelt es sich beispielsweise um ein Computerprogramm 294, welches auf einem herkömmlichen PC 296 ausgeführt werden kann. Die Verwendung einer Chipkarte 290 als Speichermedium ermöglicht dabei einen einfachen Austausch des Anwenderprogramms 292 auch ohne direkten Anschluss an den PC 296, auf dem das Programmiertool ausgeführt wird. Alternativ hierzu kann das Anwenderprogramm 292 auch in einem fest in der Steuerungseinheit 276 eingebauten Speicher, beispielsweise einem EEPROM, abgespeichert sein. Das Aufspielen des Anwenderprogramms 292 auf die Chipkarte 290 ist durch eine Leitung 297 ngedeutet.

Das Anwenderprogramm 292 legt die von der Sicherheitssteuerung 26 durchzuführenden Steuerungsaufgaben fest. Hierzu enthält das Anwenderprogramm 292 ein Sicherheitssteuerungsmodul 298, in dem diejenigen Steuerungsaufgaben durchgeführt werden, die dem Sicherheitssteuerungsaspekt zugeordnet sind. In dem Sicherheitssteuerungsmodul 298 werden sicherheitsrelevante Steuerungseingangssignale 300, die von dem Sicherheitssteuerungsaspekt zugeordneten Sicherheitssensoren 302 erzeugt werden, fehlersicher verarbeitet. Bei den Sicherheitssensoren 302 handelt es sich beispielsweise um Not-Aus-Taster, Zwei-Hand-Steuerungen, Schutztüren, Drehzahlüberwachungsgeräte oder andere Sensoren zur Aufnahme sicherheitsrelevanter Parameter. Gemäß den im Sicherheitssteuerungsaspekt zugeordneten Steuerungsaufgaben werden in Abhängigkeit der sicherheitsrelevanten Steuerungseingangssignale 300 sicherheitsrelevante Steuerungsausgangssignale 304 erzeugt, mit denen Schütze 18,20, sogenannte Sicherheitsaktoren, d.h. Aktoren, die dem Sicherheitssteuerungsaspekt zugeordnet sind, angesteuert werden. Die Arbeitskontakte der Schütze 18,20 sind in der Verbindung zwischen einer Stromversorgung 306 und den Verbraucher n 22 angeordnet. Über die Schütze 18, 20 kann die Stromversorgung der Verbrauchers 22 abgeschaltet werden, wodurch es möglich ist, bei Auftritt einer entsprechenden Fehlfunktion die Verbraucher 22 in einen sicheren Zustand zu überführen.

Darüber hinaus weist das Anwenderprogramm 292 ein Standardsteuerungsmodul 308 auf, mit dem diejenigen Steuerungsaufgaben durchgeführt werden, die dem Standardsteuerungsaspekt zugeordnet sind. Hierzu werden in dem Standardsteuerungsmodul 308 prozessrelevante Steuerungseingangssignale 310 verarbeitet, die von Standardsensoren 312 erzeugt werden. Bei den Standardsensoren 312 handelt es sich um solche Sensoren, die beispielsweise für eine Antriebsregelung benötigte Eingangsgrößen erfassen. Hierbei kann es sich beispielsweise um Drehzahlen, Winkel oder Geschwindigkeiten handeln. In Abhängigkeit der prozessrelevanten Steuerungseingangssignale 310 werden gemäß den dem Standardsteuerungsaspekt zugeordneten Steuerungsaufgaben prozessrelevante Steuerungsausgangssignale 314 erzeugt, die Standardaktoren 316 zugeführt werden. Bei den Standardaktoren 316 kann es sich beispielsweise um Motoren oder Stellzylinder handeln.

Der im Ausführungsbeispiel gewählte Aufbau des Anwenderprogramms 292, gemäß dem dieses ein Sicherheitssteuerungsmodul 298 und ein Standardsteuerungsmodul 308 enthält, weswegen von der Steuerungseinheit 276 sowohl Steuerungsaufgaben, die dem Sicherheitssteuerungsaspekt zugeordnet sind als auch Steuerungsaufgaben, die dem Standardsteuerungsaspekt zugeordnet sind, durchgeführt werden, soll keine einschränkende Wirkung haben. Selbstverständlich ist es auch denkbar, dass die Steuerungseinheit 276 lediglich Steuerungsaufgabe durchführt, die dem Sicherheitssteuerungsaspekt zugeordnet sind. In diesem Fall enthält das Anwenderprogramm 292 kein Standardsteuerungsmodul 308.

Die Ein-/Ausgabeeinheit 284 dient auch der Anbindung weiterer in der Sicherheitssteuerung 26 enthaltener Komponenten an die beiden Prozessoren 278, 280. So werden einer Prozessdiagnoseauswerteeinheit 318 ausgehend von der Ein-/Ausgabeeinheit 284 eine Anzahl 320 von Prozessdiagnoseeingangssignalen zugeführt. Die Prozessdiagnoseauswerteeinheit 318 ist dazu ausgebildet, in Abhängigkeit von der Anzahl 320 von Prozessdiagnoseeingangssignalen festzustellen, welcher von mehreren Prozesszuständen der zu steuernden Anlage 10 zu einem ersten definierten Zeitpunkt vorliegt. Die Prozessdiagnoseauswerteeinheit 318 erzeugt eine Anzahl 322 von Prozesszustandssignalen, wobei die Anzahl 322 von Prozesszustandssignalen eine Anzahl von festgestellten Prozesszuständen repräsentiert, wobei die Anzahl von festgestellten Prozesszuständen zu dem ersten definierten Zeitpunkt vorliegen. Die Anzahl 322 von Prozesszustandssignalen werden der Ein-/Ausgabeeinheit 284 zugeführt. Somit kann die Steuerungseinheit 276 den festgestellten Prozesszuständen entsprechend geeignete Maßnahmen ergreifen.

Ferner werden einer Systemdiagnoseauswerteeinheit 324 ausgehend von der Ein-/Ausgabeeinheit 284 eine Anzahl 326 von Systemdiagnoseeingangssignalen zugeführt. Die Systemdiagnoseauswerteeinheit 324 ist dazu ausgebildet, in Abhängigkeit von der Anzahl 326 von Systemdiagnoseeingangssignalen festzustellen, welcher von mehreren Systemzuständen der Sicherheitssteuerung 26 zu einem zweiten definierten Zeitpunkt vorliegt, wobei die Systemdiagnoseauswerteeinheit 324 dazu ausgebildet ist, eine Anzahl 328 von Systemzustandssignalen zu erzeugen, wobei die Anzahl 328 von Systemzustandssignalen eine Anzahl von festgestellten Systemzuständen repräsentiert, wobei die Anzahl von festgestellten Systemzuständen zu dem zweiten definierten Zeitpunkt vorliegen. Die Anzahl 328 von Systemzustandssignalen werden der Ein-/Ausgabeeinheit 284 zugeführt. Somit kann die Steuerungseinheit 276 den festgestellten Prozesszuständen entsprechend geeignete Maßnahmen ergreifen.

Ein Systemzustand soll dabei nicht nur die in der Sicherheitssteuerung 26 enthaltenen Einheiten und Komponenten erfassen, sondern auch sämtliche mit der Sicherheitssteuerung 26 elektrisch verbundenen Einheiten. Hierbei handelt es sich um die Sicherheitssensoren 302, die Schütze 18,20, allgemeiner formuliert um die Sicherheitsaktoren, die Standardsensoren 312, die Standardaktoren 316 sowie eine noch zu beschreibende Anzeigeeinheit und eine noch zu beschreibende Systemdiagnoseanforderungseinheit. Ebenfalls soll der Systemzustand sämtliche zwischen der Sicherheitssteuerung 26 und den vorstehend aufgezählten Einheiten vorhandenen Verdrahtungen umfassen.

Die Sicherheitssteuerung 26 umfasst eine Schnittstelle 330 für eine Anzeigeeinheit 332. Die Anzeigeeinheit 332 ist dazu ausgebildet, Diagnosemeldungen anzuzeigen. Ferner umfasst die Sicherheitssteuerung 26 eine Schnittstelle 334 für eine Systemdiagnoseanforderungseinheit 336, die dazu ausgebildet ist, eine Systemdiagnoseanforderung 337 zu erfassen. Die Anzeigeeinheit 332 und die Systemdiagnoseanforderungseinheit 336 können eine bauliche Einheit 338 bilden.

Darüber hinaus weist die Sicherheitssteuerung 26 eine Diagnosemeldungseinheit 340. Der Diagnosemeldungseinheit 340 werden die Anzahl 322 von Prozesszustandssignalen und die Anzahl 328 von Systemzustandssignalen zugeführt. Ferner werden der Diagnosemeldungseinheit 340 zum einen eine Anzahl 342 Prozessdiagnosemeldungen zugeführt, wobei die Prozessdiagnosemeldungen die festgestellten Prozesszustände repräsentieren. Zum anderen werden der Diagnosemeldungseinheit 340 eine Anzahl 344 von Systemdiagnosemeldungen zugeführt, wobei die Systemdiagnosemeldungen die festgestellten System zustände repräsentieren.

Die Diagnosemeldungseinheit stellt für die Anzahl von festgestellten Prozesszuständen und für die Anzahl von festgestellten Systemzuständen eine Anzahl von Diagnosemeldungen bereit. Wobei zumindest für einen der festgestellten Prozesszustände eine Diagnosemeldung in Abhängigkeit dieses Prozesszustands und einer Anzahl von zugeordneten Systemzuständen, die in der Anzahl von festgestellten Systemzuständen enthalten und diesem Prozesszustand zugeordnet sind, bereitgestellt wird. Die Diagnosemeldungseinheit 340 erzeugt eine Anzahl 346 von Diagnosesignalen, wobei die Anzahl von Diagnosesignalen die Anzahl von Diagnosemeldungen repräsentieren. Die Anzahl 346 von Diagnosesignalen werden der Anzeigeeinheit 332 über die Ein-/Ausgabeeinheit 284 zum Anzeigen der Anzahl von Diagnosemeldungen zugeführt.

Die Prozessdiagnoseauswerteeinheit 318, die Systemdiagnoseauswerteeinheit 324 und die Diagnosemeldungseinheit 340 sind in einer Diagnoseeinheit 348 zusammengefasst.

Die Diagnosemeldungseinheit 340 weist eine Zuordnungsspeichereinheit 350 auf, in der zumindest für eine Vielzahl der mehreren Prozesszustände und zumindest für eine Vielzahl der mehreren Systemzustände eine Vielzahl von Zuordnungsgrößen hinterlegt sind. Die hinterlegten Zuordnungsgrößen zeigen an, welcher der mehreren Systemzustände welchem der mehreren Prozesszustände aufgrund einer vordefinierten Zuordnung jeweils zugeordnet ist. Für eine Anzahl von Paarungen der Anzahl von festgestellten Systemzuständen und der Anzahl von festgestellten Prozesszuständen, werden eine Anzahl von hinterlegten Zuordnungsgröße ausgewählt. Jede dieser ausgewählten Zuordnungsgrößen repräsentiert zumindest eine der Paarungen. Die Anzahl von zugeordneten Systemzuständen wird in Abhängigkeit der Anzahl von Zuordnungsgrößen ermittelt.

Die Diagnosemeldungseinheit 340 weist eine Zustandsspeichereinheit 352 auf, die dazu ausgebildet ist, festgestellte Prozesszustände und festgestellte Systemzustände fortlaufend abzuspeichern. Die Diagnosemeldungseinheit 340 ist dazu ausgebildet, bei dem Ermitteln, ob es sich bei dem abzuspeichernden Systemzustand um einen zugeordneten Systemzustand handelt und/oder bei dem Ermitteln, ob für einen abzuspeichernden Prozesszustand zugeordnete Systemzustände vorliegen, bereits abgespeicherte festgestellte Systemzustände und/oder bereits abgespeicherte festgestellte Prozesszustände zu berücksichtigen.

Die Prozessdiagnoseauswerteeinheit 318 weist eine Prozessdiagnosespeichereinheit 354 auf, in der die mehreren Prozesszustände, die diese repräsentierenden Prozessdiagnosemeldungen und eine Anlagenstrukturgröße hinterlegt sind. Allesamt werden diese beim Erstellen des Anwenderprogramms 292 bereitgestellt und an die Prozessdiagnosespeichereinheit 354 übertragen, was durch eine Leitung 356 angedeutet ist. Alternativ können diese Informationen auch über die Leitung 297 auf die Chipkarte 290 übertragen werden und von dieser an die Prozessdiagnosespeichereinheit 354 weitergeleitet werden. Die Anlagengröße wird der Diagnosemeldungseinheit 340 zur Verfügung gestellt, was durch eine Leitung 358 angedeutet ist.

Die in der Zuordnungsspeichereinheit 350 hinterlegten Zuordnungsgrößen werden ebenfalls beim Erstellen des Anwenderprogramms 292 erstellt und der Zuordnungsspeichereinheit 350 zugeführt, was durch eine Leitung 360 angedeutet ist.

Die Systemdiagnoseauswerteeinheit 324 weist eine Systemdiagnosespeichereinheit 362 auf, in der die mehreren Systemzustände sowie eine Anzahl von Systemdiagnosemeldungen hinterlegt sind, wobei die Systemdiagnosemeldungen jeweils einen der mehreren Systemzustände repräsentieren. Diese Informationen sind fest hinterlegt und stammen vom Hersteller der Sicherheitssteuerung 26. Ferner ist in der Systemdiagnosespeichereinheit 362 eine Steuerungsstrukturgröße hinterlegt, die der Diagnosemeldungseinheit 340 zur Verfügung gestellt, was durch eine Leitung 364 angedeutet ist.

Über die Ein-/Ausgabeeinheit 284 werden zwischen der Sicherheitssteuerung 26 und den Sicherheitssensoren 302, den Schützen 18,20, der Anzeigeeinheit 332, der Systemdiagnoseanforderungseinheit 336 Testsignale 364 ausgetauscht. Mit Hilfe der Testsignale 364 kann in der Sicherheitssteuerung 26 festgestellt werden, ob die an sie angeschlossenen Einheiten und Komponenten fehlerfrei arbeiten, was erforderlich ist, da ein sicherer Zustand der zu steuernden Anlage 10 gewährleistet sein muss, sobald an einem mit der Sicherheitssteuerung 26 verbundenen Gerät eine Fehlfunktion auftritt.

## Patentansprüche

1. Sicherheitssteuerung zum Steuern einer automatisierten Anlage (10) mit einer Vielzahl von Anlagenhardwarekomponenten (12, 14, 16), die eine Vielzahl von Sensoren und eine Vielzahl von Aktoren umfassen,
mit einer Steuerungseinheit (276), der eine Vielzahl von Steuerungseingangssignalen von der Vielzahl von Sensoren zugeführt sind, wobei die Steuerungseinheit dazu ausgebildet ist, eine Vielzahl von Steuerungsausgangssignalen in Abhängigkeit von den Steuerungseingangssignalen gemäß einem in ihr ablaufenden Anwenderprogramm (292) zu erzeugen, wobei mit der Vielzahl von Steuerungsausgangssignalen die Vielzahl von Aktoren angesteuert werden,
mit einer Schnittstelle (330) für eine Anzeigeeinheit (332), wobei die Anzeigeeinheit dazu ausgebildet ist, Diagnosemeldungen anzuzeigen,
mit einer Prozessdiagnoseauswerteeinheit (318), der eine Anzahl von Prozessdiagnoseeingangssignalen zugeführt sind, wobei die Prozessdiagnoseauswerteeinheit dazu ausgebildet ist, in Abhängigkeit von der Anzahl von Prozessdiagnoseeingangssignalen festzustellen, welcher von mehreren Prozesszuständen der zu steuernden Anlage zu einem ersten definierten Zeitpunkt vorliegt, wobei die Prozessdiagnoseauswerteeinheit dazu ausgebildet ist, eine Anzahl von Prozesszustandssignalen zu erzeugen, wobei die Anzahl von Prozesszustandssignalen eine Anzahl von festgestellten Prozesszuständen repräsentiert, wobei die Anzahl von festgestellten Prozesszuständen zu dem ersten definierten Zeitpunkt vorliegen,
mit einer Systemdiagnoseauswerteeinheit (324), der eine Anzahl von Systemdiagnoseeingangssignalen zugeführt sind, wobei die Systemdiagnoseauswerteeinheit dazu ausgebildet ist, in Abhängigkeit von der Anzahl von Systemdiagnoseeingangssignalen festzustellen, welcher von mehreren Systemzuständen der Sicherheitssteuerung zu einem zweiten definierten Zeitpunkt vorliegt, wobei die Systemdiagnoseauswerteeinheit dazu ausgebildet ist, eine Anzahl von Systemzustandssignalen zu erzeugen, wobei die Anzahl von Systemzustandssignalen eine Anzahl von festgestellten Systemzuständen repräsentiert, wobei die Anzahl von festgestellten Systemzuständen zu dem zweiten definierten Zeitpunkt vorliegen, und
mit einer Diagnosemeldungseinheit (340), der die Anzahl von Prozesszustandssignalen und die Anzahl von Systemzustandssignalen zugeführt sind, wobei die Diagnosemeldungseinheit dazu ausgebildet ist, für die Anzahl von festgestellten Prozesszuständen und für die Anzahl von festgestellten Systemzuständen eine Anzahl von Diagnosemeldungen bereitzustellen, wobei die Diagnosemeldungseinheit eine Anzahl von Diagnosesignalen erzeugt, die die Diagnosemeldungen repräsentieren, wobei die Anzahl von Diagnosesignalen der Anzeigeeinheit zum Anzeigen der Diagnosemeldungen zugeführt sind,
**dadurch gekennzeichnet, dass** die Diagnosemeldungseinheit eine Zuordnungsspeichereinheit (350) aufweist, in der zumindest für eine Vielzahl der mehreren Prozesszustände und zumindest für eine Vielzahl der mehreren Systemzustände eine Vielzahl von Zuordnungsgrößen hinterlegt sind, wobei die hinterlegten Zuordnungsgrößen anzeigen, welcher der mehreren Systemzustände welchem der mehreren Prozesszustände aufgrund einer vordefinierten Zuordnung jeweils zugeordnet ist, wobei die Diagnosemeldungseinheit dazu ausgebildet ist, für eine Anzahl von Paarungen der festgestellten Systemzustände und der festgestellten Prozesszustände, eine Anzahl von hinterlegten Zuordnungsgröße auszuwählen, wobei jede dieser ausgewählten Zuordnungsgrößen zumindest eine der Paarungen repräsentiert, wobei die Diagnosemeldungseinheit dazu ausgebildet ist, eine Anzahl von zugeordneten Systemzuständen in Abhängigkeit der Zuordnungsgrößen zu ermitteln, und wobei zumindest für einen der festgestellten Prozesszustände eine Diagnosemeldung in Abhängigkeit dieses Prozesszustands und der Anzahl von zugeordneten Systemzuständen, die diesem Prozesszustand zugeordnet sind, bereitgestellt ist.

2. Sicherheitssteuerung nach Anspruch 1, **dadurch gekennzeichnet, dass** die Diagnosemeldungseinheit dazu ausgebildet ist, eine Anzahl von Zuordnungsgrößen zu ermitteln, wobei die Zuordnungsgrößen anzeigen, welcher der Anzahl von festgestellten Systemzuständen welchem der Anzahl von festgestellten Prozesszuständen jeweils zugeordnet ist, wobei die Diagnosemeldungseinheit dazu ausgebildet ist, die Anzahl von zugeordneten Systemzuständen in Abhängigkeit der Anzahl von Zuordnungsgrößen zu ermitteln.

3. Sicherheitssteuerung nach einem der vorstehenden Ansprüche, **dadurch gekennzeichnet, dass** die Diagnosemeldungseinheit dazu ausgebildet ist, bei Vorliegen eines festgestellten Prozesszustands und einer Anzahl von zugeordneten Systemzuständen, als Diagnosemeldung für diesen Prozesszustand eine Anzahl von Systemdiagnosemeldungen bereitzustellen, wobei die Anzahl von Systemdiagnosemeldungen die Anzahl von zugeordneten Systemzuständen repräsentieren.

4. Sicherheitssteuerung nach einem der vorstehenden Ansprüche, **dadurch gekennzeichnet, dass** die Diagnosemeldungseinheit dazu ausgebildet ist, bei Vorliegen eines festgestellten Prozesszustands und einer Anzahl von zugeordneten Systemzuständen, als Diagnosemeldung für diesen Prozesszustand eine Kombinationsdiagnosemeldung bereitzustellen, wobei die Kombinationsdiagnosemeldung sowohl eine Prozessdiagnosemeldung als auch eine Anzahl von Systemdiagnosemeldungen beinhaltet, wobei die Prozessdiagnosemeldung den festgestellten Prozesszustand repräsentiert und die Anzahl von Systemdiagnosemeldungen die Anzahl von zugeordneten Systemzustände repräsentieren.

5. Sicherheitssteuerung nach Anspruch 4, **dadurch gekennzeichnet, dass** die Anzeigeeinheit dazu ausgebildet ist,
- zunächst die Prozessdiagnosemeldung anzuzeigen und bei Vorliegen einer Systemdiagnoseanforderung die Prozessdiagnosemeldung durch zumindest eine der Anzahl von Systemdiagnosemeldungen zu ersetzen oder ergänzend zu der Prozessdiagnosemeldung zumindest eine der Anzahl von Systemdiagnosemeldungen anzuzeigen, oder
- die Prozessdiagnosemeldung und zumindest eine der Anzahl von Systemdiagnosemeldungen gleichzeitig anzuzeigen, oder
- lediglich zumindest eine der Anzahl von Systemdiagnosemeldungen anzuzeigen.

6. Sicherheitssteuerung nach einem der vorstehenden Ansprüche, **dadurch gekennzeichnet, dass** die Diagnosemeldungseinheit dazu ausgebildet ist, bei Vorliegen eines festgestellten Prozesszustandes und einer Anzahl von zugeordneten Systemzuständen, als eine erste Diagnosemeldung zunächst eine Prozessdiagnosemeldung bereitzustellen und bei Vorliegen einer Systemdiagnoseanforderung als eine zweite Diagnosemeldung zusätzlich eine Anzahl von Systemdiagnosemeldungen bereitzustellen, wobei die Prozessdiagnosemeldung den festgestellten Prozesszustand repräsentiert und die Anzahl von Systemdiagnosemeldungen die Anzahl von zugeordneten Systemzuständen repräsentieren.

7. Sicherheitssteuerung nach Anspruch 6, **dadurch gekennzeichnet, dass** die Anzeigeeinheit dazu ausgebildet ist, die Prozessdiagnosemeldung durch zumindest eine der Anzahl von Systemdiagnosemeldungen zu ersetzen oder zumindest eine der Anzahl von Systemdiagnosemeldungen ergänzend zu der Prozessdiagnosemeldung anzuzeigen.

8. Sicherheitssteuerung nach Anspruch 5 oder 6, **dadurch gekennzeichnet, dass** der Anzeigeeinheit eine Systemdiagnoseanforderungseinheit zugeordnet ist, wobei die Systemdiagnoseanforderungseinheit dazu ausgebildet ist, eine Systemdiagnoseanforderung zu erfassen.

9. Sicherheitssteuerung nach einem der vorstehenden Ansprüche, **dadurch gekennzeichnet, dass** die Prozessdiagnoseauswerteeinheit dazu ausgebildet ist, fortlaufend festzustellen, welcher von mehreren Prozesszuständen zu einem definierten Zeitpunkt jeweils vorliegt, und/oder dass die Systemdiagnoseauswerteeinheit dazu ausgebildet ist, fortlaufend festzustellen, welcher von mehreren Systemzuständen zu einem definierten Zeitpunkt jeweils vorliegt.

10. Sicherheitssteuerung nach Anspruch 9, **dadurch gekennzeichnet, dass** die Diagnosemeldungseinheit eine Zustandsspeichereinheit aufweist, die dazu ausgebildet ist, festgestellte Prozesszustände und festgestellte Systemzustände fortlaufend abzuspeichern, wobei die Diagnosemeldungseinheit dazu ausgebildet ist, bei dem Ermitteln, ob es sich bei dem abzuspeichernden Systemzustand um einen zugeordneten Systemzustand handelt und/oder bei dem Ermitteln, ob für einen abzuspeichernden Prozesszustand zugeordnete Systemzustände vorliegen, bereits abgespeicherte festgestellte Systemzustände und/oder bereits abgespeicherte festgestellte Prozesszustände zu berücksichtigen.

11. Sicherheitssteuerung nach einem der vorstehenden Ansprüche, **dadurch gekennzeichnet, dass** die Steuerungseinheit eine Ein-/Ausgabeeinheit mit mehreren Eingängen und mit mehreren Ausgängen aufweist, wobei die Ein-/Ausgabeeinheit dazu ausgebildet ist, über eine Anzahl der mehreren Eingänge jeweils zumindest eines der Vielzahl von Steuerungseinganssignalen aufzunehmen und über eine Anzahl der mehreren Ausgänge jeweils zumindest eines der Vielzahl von Steuerungsausgangssignalen auszugeben, wobei das Anwenderprogramm mehrere Programmvariablen umfasst, wobei die mehreren Programmvariablen eine Vielzahl von Eingangsvariablen und eine Vielzahl von Ausgangsvariablen umfassen, wobei gemäß einer bei dem Erstellen des Anwenderprogramms definierten Zuordnungsregel zum einen die Eingangsvariablen jeweils einem der Eingänge und einem über diesen Eingang aufgenommenen Steuerungseingangssignal und zum anderen die Ausgangsvariablen jeweils einem der Ausgänge und einem über diesen Ausgang ausgegebenen Steuerungsausgangssignal zugeordnet sind, wobei die hinterlegten Zuordnungsgrößen in Abhängigkeit der Zuordnungsregel erstellt sind.

12. Sicherheitssteuerung nach einem der vorstehenden Ansprüche, **dadurch gekennzeichnet, dass** das Anwenderprogramm durch Bereitstellen einer Vielzahl von Softwarekomponenten erstellt wird, wobei die Vielzahl der Softwarekomponenten der Vielzahl von Anlagenhardwarekomponenten entsprechen, wobei zumindest einer Anzahl der Softwarekomponenten jeweils eine Anzahl der mehreren Prozesszustände sowie eine Anzahl von Prozessdiagnosemeldungen zugeordnet sind, wobei die Anzahl von Prozessdiagnosemeldungen die Anzahl der mehreren Prozesszustände repräsentieren.

13. Sicherheitssteuerung nach einem der vorstehenden Ansprüche, **dadurch gekennzeichnet, dass** das Anwenderprogramm einen hierarchisch strukturierten Aufbau mit mehreren Hierarchieebenen aufweist, wobei bei dem Erstellen des Anwenderprogramms eine Anlagenstrukturgröße ermittelt wird, die den hierarchisch strukturierten Aufbau des Anwenderprogramms repräsentiert, wobei die Diagnosemeldungseinheit dazu ausgebildet ist, die Anzahl von Diagnosemeldungen in Abhängigkeit der Anlagenstrukturgröße bereitzustellen.

14. Sicherheitssteuerung nach einem der vorstehenden Ansprüche, **dadurch gekennzeichnet, dass** die Systemdiagnoseauswerteeinheit eine Systemdiagnosespeichereinheit aufweist, wobei in der Systemdiagnosespeichereinheit die mehreren Systemzustände sowie eine Anzahl von Systemdiagnosemeldungen hinterlegt sind, wobei die Systemdiagnosemeldungen jeweils einen der mehreren Systemzustände repräsentieren.

15. Sicherheitssteuerung nach einem der vorstehenden Ansprüche, **dadurch gekennzeichnet, dass** die Sicherheitssteuerung aus mehreren Steuerungshardwarekomponenten aufgebaut ist, wobei zumindest einer Anzahl der Steuerungshardwarekomponenten jeweils eine Anzahl der mehreren Systemzustände sowie eine Anzahl von Systemdiagnosemeldungen zugeordnet sind, wobei die Anzahl von Systemdiagnosemeldungen die Anzahl der mehreren Systemzustände repräsentieren.

16. Sicherheitssteuerung nach einem der vorstehenden Ansprüche, **dadurch gekennzeichnet, dass** die Sicherheitssteuerung einen hierarchisch strukturierten Aufbau aufweist, wobei in der Systemdiagnosespeichereinheit eine Steuerungsstrukturgröße hinterlegt ist, die den hierarchisch strukturierten Aufbau der Sicherheitssteuerung repräsentiert, wobei die Diagnosemeldungseinheit dazu ausgebildet ist, die Anzahl von Diagnosemeldungen in Abhängigkeit der Steuerungsstrukturgröße bereitzustellen.

17. Verfahren zum Steuern einer automatisierten Anlage (10) mit einer Vielzahl von Anlagenhardwarekomponenten (12, 14, 16), die eine Vielzahl von Sensoren und Aktoren umfassen, mit den Schritten:
- Feststellen in Abhängigkeit von einer Anzahl von Prozessdiagnoseeingangssignalen, welcher von mehreren Prozesszuständen der zu steuernden Anlage zu einem ersten definierten Zeitpunkt vorliegt, und Erzeugen einer Anzahl von Prozesszustandssignalen, wobei die Anzahl von Prozesszustandssignalen eine Anzahl von festgestellten Prozesszuständen repräsentiert, wobei die Anzahl von festgestellten Prozesszuständen zu dem ersten definierten Zeitpunkt vorliegen,
- Feststellen in Abhängigkeit von einer Anzahl von Systemdiagnoseeingangssignalen, welcher von mehreren Systemzuständen der Sicherheitssteuerung zu einem zweiten definierten Zeitpunkt vorliegt, und Erzeugen einer Anzahl von Systemzustandssignalen, wobei die Anzahl von Systemzustandssignalen eine Anzahl von festgestellten Systemzuständen repräsentiert, wobei die Anzahl von festgestellten Systemzuständen zu dem zweiten definierten Zeitpunkt vorliegen,
- Zuführen der Anzahl von Prozesszustandssignalen und der Anzahl von Systemzustandssignalen zu einer Diagnosemeldungseinheit (340),
- Bereitstellen einer Anzahl von Diagnosemeldungen für die Anzahl von festgestellten Prozesszuständen und für die Anzahl von festgestellten Systemzuständen, und Erzeugen einer Anzahl von Diagnosesignalen in der Diagnosemeldungseinheit, wobei die Anzahl von Diagnosesignalen die Anzahl von Diagnosemeldungen repräsentieren,
- Zuführen der Anzahl von Diagnosesignalen zu einer Anzeigeeinheit zum Anzeigen der Anzahl von Diagnosemeldungen,
**dadurch gekennzeichnet, dass** die Diagnosemeldungseinheit eine Zuordnungsspeichereinheit (350) aufweist, in der zumindest für eine Vielzahl der mehreren Prozesszustände und zumindest für eine Vielzahl der mehreren Systemzustände eine Vielzahl von Zuordnungsgrößen hinterlegt sind, wobei die hinterlegten Zuordnungsgrößen anzeigen, welcher der mehreren Systemzustände welchem der mehreren Prozesszustände aufgrund einer vordefinierten Zuordnung jeweils zugeordnet ist, wobei die Diagnosemeldungseinheit dazu ausgebildet ist, für eine Anzahl von Paarungen der festgestellten Systemzustände und der festgestellten Prozesszustände, eine Anzahl von hinterlegten Zuordnungsgröße auszuwählen, wobei jede dieser ausgewählten Zuordnungsgrößen zumindest eine der Paarungen repräsentiert, wobei die Diagnosemeldungseinheit dazu ausgebildet ist, eine Anzahl von zugeordneten Systemzuständen in Abhängigkeit der Zuordnungsgrößen zu ermitteln, wobei zumindest für einen der festgestellten Prozesszustände eine Diagnosemeldung in Abhängigkeit dieses Prozesszustands und der Anzahl von zugeordneten Systemzuständen, die diesem Prozesszustand zugeordnet sind, bereitgestellt wird.

18. Computerprogramm mit einem Datenträger mit Programmcode, der dazu ausgebildet ist, ein Verfahren nach Anspruch 17 durchzuführen, wenn der Programmcode auf einer Sicherheitssteuerung nach einem der Ansprüche 1 bis 16 abläuft.

## Claims

1. A safety controller for controlling an automated installation (10) having a plurality of installation hardware components (12, 14, 16) which comprise a plurality of sensors and a plurality of actuators,
comprising a control unit (276) to which a plurality of control input signals from the plurality of sensors are supplied, wherein the control unit is designed to produce a plurality of control output signals on the basis of the control input signals in accordance with a user program (292) running in said control unit, wherein the plurality of control output signals are used to actuate the plurality of actuators,
comprising an interface (330) for a display unit (332), wherein the display unit is designed to display diagnosis reports,
comprising a process diagnosis evaluation unit (318) to which a number of process diagnosis input signals are supplied, wherein the process diagnosis evaluation unit is designed to take the number of process diagnosis input signals as a basis for determining which of a plurality of process states of the installation to be controlled is present at a first defined time, wherein the process diagnosis evaluation unit is designed to produce a number of process state signals, wherein the number of process state signals represent a number of determined process states, wherein the number of determined process states are present at the first defined time,
comprising a system diagnosis evaluation unit (324) to which a number of system diagnosis input signals are supplied, wherein the system diagnosis evaluation unit is designed to take the number of system diagnosis input signals as a basis for determining which of a plurality of system states of the safety controller is present at a second defined time, wherein the system diagnosis evaluation unit is designed to produce a number of system state signals, wherein the number of system state signals represents a number of determined system states, wherein the number of determined system states are present at the second defined time, and
comprising a diagnosis report unit (324) to which the number of process state signals and the number of system state signals are supplied, wherein the diagnosis report unit is designed to provide a number of diagnosis reports for the number of determined process states and for the number of determined system states, wherein the diagnosis report unit produces a number of diagnosis signals which represent the diagnosis reports, wherein the number of diagnosis signals are supplied to the display unit for the purpose of displaying the number of diagnosis reports,
**characterized in that** the diagnosis report unit has an association memory unit (350) which stores a plurality of association variables at least for a plurality of the process states and at least for a plurality of the system states, wherein the stored association variables indicate which of the plurality of system states is respectively associated with which of the plurality of process states on the basis of a predefined association, wherein the diagnosis report unit is designed to select a number of stored association variables for a number of pairings between the determined system states and the determined process states, wherein each of these selected association variables represents at least one of the pairings, wherein the diagnosis report unit is designed to establish a number of associated system states on the basis of the association variables, and wherein at least for one of the determined process states a diagnosis report is provided on the basis of this process state and a number of associated system states which are associated with this process state.

2. The safety controller of claim 1, **characterized in that** the diagnosis report unit is designed to determine a number of association variables, wherein the association variables indicate which of the number of determined system states is respectively associated with which of the number of determined process states, wherein the diagnosis report unit is designed to establish the number of associated system states on the basis of the number of association variables.

3. The safety controller of one of the preceding claims, **characterized in that** the diagnosis report unit is designed so that, when a determined process state and a number of associated system states are present, it provides a number of system diagnosis reports as a diagnosis report for this process state, wherein the number of the system diagnosis reports represent the number of associated system states.

4. The safety controller of one of the preceding claims, **characterized in that** the diagnosis report unit is designed so that, when a determined process state and a number of associated system states are present, it provides a combination diagnosis report as a diagnosis report for this process state, wherein the combination diagnosis report comprises both a process diagnosis report and a number of system diagnosis reports, wherein the process diagnosis report represents the determined process state and the number of system diagnosis reports represent the number of associated system states.

5. The safety controller of claim 4, **characterized in that** the display unit is designed
- first of all to display the process diagnosis report and, when a system diagnosis request is present, to replace the process diagnosis report with at least one of the number of system diagnosis reports or, as a supplement to the process diagnosis report, to display at least one of the number of system diagnosis reports, or
- to display the process diagnosis report and at least one of the number of system diagnosis reports simultaneously, or
- to display only at least one of the number of system diagnosis reports.

6. The safety controller of one of the preceding claims, **characterized in that** the diagnosis report unit is designed so that, when a determined process state and a number of associated system states are present, it first of all provides a process diagnosis report as a first diagnosis report and, when a system diagnosis request is present, it additionally provides a number of system diagnosis reports as a second diagnosis report, wherein the process diagnosis report represents the determined process state and the number of system diagnosis reports represent the number of associated system states.

7. The safety controller of claim 6, **characterized in that** the display unit is designed to replace the process diagnosis report with at least one of the number of system diagnosis reports or to display at least one of the number of system diagnosis reports as a supplement to the process diagnosis report.

8. The safety controller of claim 5 or 6, **characterized by** a system diagnosis request unit associated with the display unit, wherein the system diagnosis request unit is designed to detect a system diagnosis request.

9. The safety controller of one of the preceding claims, **characterized in that** the process diagnosis evaluation unit is designed to repeatedly determine which of a plurality of process states is present at a defined time, and/or **in that** the system diagnosis evaluation unit is designed to repeatedly determine which of a plurality of system states is respectively present at a defined time.

10. The safety controller of claim 9, **characterized in that** the diagnosis report unit has a state memory unit which is designed to repeatedly store determined process states and determined system states, wherein the diagnosis report unit is designed to use determined system states already stored and/or determined process states already stored, when establishing whether a system state to be stored is an associated system state and/or when establishing whether associated system states are present for a process state that is to be stored.

11. The safety controller of one of the preceding claims, **characterized in that** the control unit has an input/output unit having a plurality of inputs and having a plurality of outputs, wherein the input/output unit is designed to use a number of the plurality of inputs to receive at least one of the plurality of control input signals and to use a number of the plurality of outputs to output at least one of the plurality of control output signals, wherein the user program comprises a plurality of program variables, wherein the plurality of program variables comprise a plurality of input variables and a plurality of output variables, wherein, according to an association rule defined during the creation of the user program, the input variables are associated with respective ones of the inputs and with control input signals received via said respective ones of the inputs, and the output variables are associated with respective ones of the outputs and with control output signals provided via said respective ones of the outputs, wherein the stored association variables have been created on the basis of the association rule.

12. The safety controller of one of the preceding claims, **characterized in that** the user program is created by providing a plurality of software components, wherein the plurality of the software components correspond to the plurality of installation hardware components, wherein at least a number of the software components respectively have been associated with a number of the plurality of process states and with a number of process diagnosis reports, wherein the number of process diagnosis reports represent the number of the process states.

13. The safety controller of one of the preceding claims, **characterized in that** the user program has a hierarchically structured design with a plurality of hierarchical levels, wherein during the creation of the user program an installation structure variable is determined, which installation structure variable represents the hierarchically structured design of the user program, wherein the diagnosis report unit is designed to provide the number of diagnosis reports on the basis of the installation structure size.

14. The safety controller of one of the preceding claims, **characterized in that** the system diagnosis evaluation unit has a system diagnosis memory unit, wherein the system diagnosis memory unit stores the plurality of system states and a number of system diagnosis reports, wherein the system diagnosis reports each represent one of the plurality of system states.

15. The safety controller of one of the preceding claims, **characterized in that** the safety controller has a plurality of control hardware components, wherein at least a number of the control hardware components respectively has an associated a number of the plurality of system states and associated a number of system diagnosis reports, wherein the number of system diagnosis reports represent the number of the plurality of system states.

16. The safety controller of one of the preceding claims, **characterized in that** the safety controller has a hierarchically structured design, wherein the system diagnosis memory unit stores a control structure variable which represents the hierarchically structured design of the safety controller, wherein the diagnosis report unit is designed to provide the number of diagnosis reports on the basis of the control structure size.

17. A method for controlling an automated installation (10) having a plurality of installation hardware components (12, 14, 16) which comprise a plurality of sensors and actuators, the method comprising the following steps:
- a number of process diagnosis input signals is taken as a basis for determining which of a plurality of process states of the system to be controlled is present at a first defined time, and a number of process state signals are produced, wherein the number of process state signals represents a number of determined process states, wherein the number of determined process states are present at the first defined time,
- a number of system diagnosis input signals is taken as a basis for determining which of a plurality of system states of the safety controller is present at a second defined time, and a number of system state signals are produced, wherein the number of system state signals represents a number of determined system states, wherein the number of determined system states are present at the second defined time,
- the number of process state signals and the number of system state signals are supplied to a diagnosis report unit,
- a number of diagnosis reports are provided for the number of determined process states and for the number of determined system states, and a number of diagnosis signals is produced in the diagnosis report unit, wherein the number of diagnosis signals represent the number of diagnosis reports,
- the number of diagnosis signals are supplied to a display unit for the purpose of displaying the number of diagnosis reports,
**characterized in that** the diagnosis report unit has an association memory unit (350) which stores a plurality of association variables at least for a plurality of the process states and at least for a plurality of the system states, wherein the stored association variables indicate which of the plurality of system states is respectively associated with which of the plurality of process states on the basis of a predefined association, wherein the diagnosis report unit is designed to select a number of stored association variables for a number of pairings between the determined system states and the determined process states, wherein each of these selected association variables represents at least one of the pairings, wherein the diagnosis report unit is designed to establish a number of associated system states on the basis of the association variables, and wherein at least for one of the determined process states a diagnosis report is provided on the basis of this process state and on the basis of a number of associated system states which are associated with this process state.

18. A computer program having a data storage medium with program code designed to carry out a method according to claim 17 when the program code is executed on a safety controller according to one of claims 1 to 16.

## Revendications

1. Commande de sécurité pour commander une installation automatisée (10) avec une pluralité de composants matériels de l'installation (12, 14, 16) comprenant une pluralité de capteurs et une pluralité d'acteurs,
avec une unité de commande (276) recevant une pluralité de signaux d'entrée de commande de la pluralité de capteurs, dans laquelle l'unité de commande est conçue pour produire une pluralité de signaux de sortie de commande en fonction des signaux d'entrée de commande, selon un programme d'utilisateur (292) exécuté sur celle-ci, dans laquelle la pluralité de signaux de sortie de commande permet d'actionner la pluralité d'acteurs,
avec une interface (330) pour une unité d'affichage (332), dans laquelle l'unité d'affichage est conçue pour afficher des messages de diagnostic,
avec une unité d'évaluation de diagnostic de processus (318) recevant un nombre de signaux d'entrée de diagnostic de processus, dans laquelle l'unité d'évaluation de diagnostic de processus est conçue pour déterminer, en fonction du nombre de signaux d'entrée de diagnostic de processus, lequel parmi plusieurs états de processus de l'installation à commander se présente à un premier moment donné, dans laquelle l'unité d'évaluation de diagnostic de processus est conçue pour produire un nombre de signaux d'état de processus, dans laquelle le nombre de signaux d'état de processus représente un nombre d'états de processus déterminés, dans laquelle le nombre d'états de processus déterminés se présente au premier moment donné,
avec une unité d'évaluation de diagnostic de système (324) recevant un nombre de signaux d'entrée de diagnostic de système, dans laquelle l'unité d'évaluation de diagnostic de système est conçue pour déterminer, en fonction du nombre de signaux d'entrée de diagnostic de système, lequel parmi plusieurs états de système de la commande de sécurité se présente à un deuxième moment donné, dans laquelle l'unité d'évaluation de diagnostic de système est conçue pour produire un nombre de signaux d'état de système, dans laquelle le nombre de signaux d'état de système représente un nombre d'états de système déterminés, dans laquelle le nombre d'états de système déterminés se présente au deuxième moment donné, et
avec une unité d'annonce de diagnostic (340) recevant le nombre de signaux d'état de processus et le nombre de signaux d'état de système, dans laquelle l'unité d'annonce de diagnostic est conçue pour fournir un nombre de messages de diagnostic pour le nombre d'états de processus déterminés et pour le nombre d'états de système déterminés, dans laquelle l'unité d'annonce de diagnostic produit un nombre de signaux de diagnostic représentant les messages de diagnostic, dans laquelle le nombre de signaux de diagnostic est transmis à l'unité d'affichage pour afficher les messages de diagnostic,
**caractérisée en ce que** l'unité d'annonce de diagnostic comporte une unité de stockage d'attributions (350), dans laquelle une pluralité de valeurs d'attribution est enregistrée, pour au moins plusierus parmi la pluralité d'états de processus et pour au moins plusieurs parmi la pluralité d'états de système, dans laquelle les valeurs d'attribution enregistrées indiquent lequel parmi la pluralité d'états de système est respectivement attribué auquel parmi la pluralité d'états processus, en se basant sur une attribution prédéfinie, dans laquelle l'unité d'annonce de diagnostic est conçue pour sélectionner un nombre de valeurs d'attribution enregistrées pour un nombre de paires d'états de système déterminés et d'états de processus déterminés, où chacune de ces valeurs d'attribution sélectionnées représente au moins l'une des paires, dans laquelle l'unité d'annonce de diagnostic est conçue pour déterminer un nombre d'états de système attribués en fonction des valeurs d'attribution, et dans laquelle un message de diagnostic est fourni pour au moins l'un des états de processus déterminés, en fonction de cet état de processus et du nombre d'états de système attribués à cet état de processus.

2. Commande de sécurité selon la revendication 1, **caractérisée en ce que** l'unité d'annonce de diagnostic est conçue pour déterminer un nombre de valeurs d'attribution, dans laquelle les valeurs d'attribution indiquent lequel parmi le nombre d'états de système déterminés est respectivement attribué auquel parmi le nombre d'états de processus déterminés, dans laquelle l'unité d'annonce de diagnostic est conçue pour déterminer le nombre d'états de système attribués en fonction du nombre de valeurs d'attribution.

3. Commande de sécurité selon l'une des revendications précédentes, **caractérisée en ce que** l'unité d'annonce de diagnostic est conçue pour fournir, en présence d'un état de processus déterminé et d'un nombre d'états de système attribués, un nombre de messages de diagnostic de système en tant que messages de diagnostic pour cet état de processus, dans laquelle le nombre de messages de diagnostic de système représente le nombre d'états de système attribués.

4. Commande de sécurité selon l'une des revendications précédentes, **caractérisée en ce que** l'unité d'annonce de diagnostic est conçue pour fournir, en présence d'un état de processus déterminé et d'un nombre d'états de système attribués, un message de diagnostic combiné, en tant que message de diagnostic pour cet état de processus, dans laquelle le message de diagnostic combiné contient aussi bien un message de diagnostic de processus qu'un nombre de messages de diagnostic de système, dans laquelle le message de diagnostic de processus représente l'état de processus déterminé et le nombre de messages de diagnostic de système représente le nombre d'états de système attribués.

5. Commande de sécurité selon la revendication 4, **caractérisée en ce que** l'unité d'affichage est conçue pour
- afficher tout d'abord un message de diagnostic de processus, et, en présence d'une demande de diagnostic de système, remplacer le message de diagnostic de processus par au moins l'un parmi le nombre de messages de diagnostic de système, ou afficher au moins l'un parmi le nombre de messages de diagnostic de système en complément du message de diagnostic de processus, ou
- afficher simultanément le message de diagnostic de processus et au moins l'un parmi le nombre de messages de diagnostic de système, ou
- afficher seulement au moins l'un parmi le nombre de messages de diagnostic de système.

6. Commande de sécurité selon l'une des revendications précédentes, **caractérisée en ce que** l'unité d'annonce de diagnostic est conçue pour fournir tout d'abord un message de diagnostic de processus en tant que premier message de diagnostic, en présence d'un état de processus déterminé et d'un nombre d'états de système attribués, et pour fournir en outre un nombre de messages de diagnostic de système, en présence d'une demande de diagnostic de système, en tant que deuxième message de diagnostic, dans laquelle le message de diagnostic de processus représente l'état de processus déterminé et le nombre de messages de diagnostic de système représente le nombre d'états de système attribués.

7. Commande de sécurité selon la revendication 6, **caractérisée en ce que** l'unité d'affichage est conçue pour remplacer le message de diagnostic de processus par au moins l'un parmi le nombre de messages de diagnostic de système, ou pour afficher au moins l'un parmi le nombre de messages de diagnostic de système en complément du message de diagnostic de processus.

8. Commande de sécurité selon la revendication 5 ou 6, **caractérisée en ce qu'**une unité de demande de diagnostic de système est attribuée à l'unité d'affichage, dans laquelle l'unité de demande de diagnostic de système est conçue pour détecter une demande de diagnostic de système.

9. Commande de sécurité selon l'une des revendications précédentes, **caractérisée en ce que** l'unité d'évaluation de diagnostic de processus est conçue pour déterminer en permanence lequel parmi plusieurs états de processus se présente respectivement à un moment donné, et/ou **en ce que** l'unité d'évaluation de diagnostic de système est conçue pour déterminer en permanence lequel parmi plusieurs états de système se présente respectivement à un moment donné.

10. Commande de sécurité selon la revendication 9, **caractérisée en ce que** l'unité d'annonce de diagnostic comporte une unité de stockage d'états conçue pour enregistrer en permanence des états de processus déterminés et des états de système déterminés, dans laquelle l'unité d'annonce de diagnostic est conçue pour prendre en compte des états de système déterminés déjà enregistrés et/ou des états de processus déterminés déjà enregistrés, lorsqu'il est déterminé si l'état de système à enregistrer est un état de système attribué et/ou lorsqu'il est déterminé si des états de système se présentent pour un état de processus à enregistrer.

11. Commande de sécurité selon l'une des revendications précédentes, **caractérisée en ce que** l'unité de commande comporte une unité d'entrée/sortie avec plusieurs entrées et avec plusieurs sorties, dans laquelle l'unité d'entrée/sortie est conçue pour recevoir respectivement au moins l'un parmi la pluralité de signaux d'entrée de commande, par certaines parmi la pluralité d'entrées, et pour émettre respectivement au moins l'un parmi la pluralité de signaux de sortie de commande, par certaines parmi la pluralité de sorties, dans laquelle le programme d'utilisateur comprend plusieurs variables de programme, dans laquelle la pluralité de variables de programme comprend une pluralité de variables d'entrée et une pluralité de variables de sortie, dans laquelle les variables d'entrée sont d'une part attribuées respectivement à l'une des entrées et à un signal d'entrée de commande reçu par cette entrée, et les variables de sortie sont d'autre part attribuées respectivement à l'une des sorties et à un signal de sortie de commande émis par cette sortie, selon une règle d'attribution définie lors de l'élaboration du programme d'utilisateur, les valeurs d'attribution enregistrées étant établies en fonction de la règle d'attribution.

12. Commande de sécurité selon l'une des revendications précédentes, **caractérisée en ce que** le programme d'utilisation est établi à partir de la fourniture d'une pluralité de composants logiciels, dans laquelle la pluralité de composants logiciels correspond à la pluralité de composants matériels de l'installation, dans laquelle plusieurs parmi la pluralité d'états de processus ainsi qu'un nombre de messages de diagnostic de processus sont respectivement attribués à certains au moins des composants logiciels, dans laquelle le nombre de messages de diagnostic de processus représente la pluralité d'états de processus.

13. Commande de sécurité selon l'une des revendications précédentes, **caractérisée en ce que** le programme d'utilisateur comporte une structure hiérarchique avec plusieurs niveaux hiérarchiques, dans laquelle, lors de l'élaboration du programme d'utilisateur, une valeur de structure d'installation représentant la structure hiérarchique du programme d'utilisateur est déterminée, dans laquelle l'unité d'annonce de diagnostic est conçue pour fournir le nombre de messages de diagnostic en fonction de la valeur de structure d'installation.

14. Commande de sécurité selon l'une des revendications précédentes, **caractérisée en ce que** l'unité d'évaluation de diagnostic de système comporte une unité de stockage de diagnostics de système, dans laquelle la pluralité d'états de système ainsi qu'un nombre de messages de diagnostic de système sont enregistrés dans l'unité de stockage de diagnostics de système, dans laquelle les messages de diagnostic de système représentent respectivement l'un parmi la pluralité d'états de système.

15. Commande de sécurité selon l'une des revendications précédentes, **caractérisée en ce que** la commande de sécurité est constituée de plusieurs composants matériels de commande, dans laquelle certains parmi la pluralité d'états de système ainsi qu'un nombre de messages de diagnostic de système sont respectivement attribués à au moins certains parmi les composants matériels de commande, dans laquelle le nombre de messages de diagnostic de système représente la nombre de la pluralité d'états de système.

16. Commande de sécurité selon l'une des revendications précédentes, **caractérisée en ce que** la commande de sécurité comporte une structure hiérarchique, dans laquelle une valeur de structure de commande représentant la structure hiérarchique de la commande de sécurité est enregistrée dans l'unité de stockage de diagnostics de système, dans laquelle l'unité d'annonce de diagnostic est conçue pour fournir le nombre de messages de diagnostic en fonction de la valeur de structure de commande.

17. Procédé pour commander une installation automatisée (10), avec une pluralité de composants matériels de l'installation (12, 14, 16) comprenant une pluralité de capteurs et d'acteurs, avec les étapes suivantes :
- déterminer, en fonction d'un nombre de signaux d'entrée de diagnostic de processus, lequel parmi plusieurs états de processus de l'installation à commander se présente à un premier moment donné, et produire un nombre de signaux d'état de processus, où le nombre de signaux d'état de processus représente un nombre d'états de processus déterminés, où le nombre d'états de processus déterminés se présente au premier moment donné,
- déterminer, en fonction d'un nombre de signaux d'entrée de diagnostic de système, lequel parmi plusieurs états de système de la commande de sécurité se présente à un deuxième moment donné, et produire un nombre de signaux d'état de système, où le nombre de signaux d'état de système représente un nombre d'états de système déterminés, où le nombre d'états de système déterminés se présente au deuxième moment donné,
- transmettre le nombre de signaux d'état de processus et le nombre de signaux d'état de système à une unité d'annonce de diagnostic (340),
- fournir un nombre de messages de diagnostic pour le nombre d'états de processus déterminés et pour le nombre d'états de système déterminés, et produire un nombre de signaux de diagnostic dans l'unité d'annonce de diagnostic, où le nombre de signaux de diagnostic représente le nombre de messages de diagnostic,
- transmettre le nombre de signaux de diagnostic à une unité d'affichage pour afficher le nombre de messages de diagnostic,
**caractérisé en ce que** l'unité d'annonce de diagnostic comporte une unité de stockage d'attributions (350), dans laquelle une pluralité de valeurs d'attribution est enregistrée, pour au moins plusieurs parmi la pluralité d'états de processus et pour au moins plusieurs parmi la pluralité d'états de système, dans lequel les valeurs d'attribution enregistrées indiquent lequel parmi la pluralité d'états de système est respectivement attribué auquel parmi la pluralité d'états de processus, en se basant sur une attribution prédéfinie, dans lequel l'unité d'annonce de diagnostic est conçue pour sélectionner un nombre de valeurs d'attribution enregistrées pour un nombre de paires d'états de système déterminés et d'états de processus déterminés, où chacune de ces valeurs d'attribution sélectionnées représente au moins l'une des paires, dans lequel l'unité d'annonce de diagnostic est conçue pour déterminer un nombre d'états de système attribués en fonction des valeurs d'attribution, et dans lequel un message de diagnostic est fourni pour au moins l'un des états de processus déterminés, en fonction de cet état de processus et du nombre d'états de système attribués à cet état de processus.

18. Programme informatique avec un support de données avec un code de programme, conçu pour exécuter un procédé selon la revendication 17, lorsque le code de programme est exécuté sur une commande de sécurité selon l'une des revendications 1 à 16.
